# EUROPEAN PATENT APPLICATION

(11) **EP 3 817 272 A1**
(43) Date of publication of application: **05.05.2021**
(21) Application number: 19893018.2
(22) Date of filing: 30.11.2019
(51) Int. Cl.: H04L 9/00

(54) **INFORMATION SYNCHRONIZATION METHOD, AUTHENTICATION METHOD AND DEVICE**

(30) Priority: 04.12.2018 CN 201811476240
(71) Applicant: Huawei Technologies Co., Ltd., Shenzhen, Guangdong 518129 (CN)
(72) Inventor: HUANG, Zhongjin, Shenzhen, Guangdong 518129 (CN)
(74) Representative: MERH-IP Matias Erny Reichl Hoffmann Patentanwälte PartG mbB
(86) International application number: PCT/CN2019/122252
(87) International publication number: WO 2020/114336

(57) **Abstract**

This application provides an information synchronization method, an authentication method, and an apparatus, and relates to the field of network technologies. In this application, security group association information is synchronized from an authentication node to an execution node, so that the execution node can obtain the security group association information of a terminal, and the execution node can perceive, based on the security group association information, a security group to which the terminal belongs. In this way, a packet of the terminal can be processed based on a security group policy, thereby implementing separation between the authentication node and the execution node, breaking a constraint on networking, expanding an application range, and improving compatibility.

## Description

This application claims priority to Chinese Patent Application No. 201811476240.3, filed with the China National Intellectual Property Administration on December 4, 2018 and entitled "INFORMATION SYNCHRONIZATION METHOD, AUTHENTICATION METHOD, AND APPARATUS", which is incorporated herein by reference in its entirety.

### TECHNICAL FIELD

This application relates to the field of network technologies, and in particular, to an information synchronization method, an authentication method, and an apparatus.

### BACKGROUND

With construction and popularization of a wireless network and mature application of a remote access technology, a boundary of the wireless network is disappearing, and an access location of a wireless network terminal often moves in a wide range. To ensure normal processing of a service of the terminal, a free mobility technology may be implemented to ensure that access rights of the terminal are consistent regardless of an access location of the terminal. In the free mobility technology, node devices may be classified into at least an authentication node and an execution node based on different functions of the node devices. When the terminal initiates authentication, the authentication node authenticates the terminal to determine a security group to which the terminal belongs. When the terminal sends a packet, the execution node determines a security group policy that matches the security group to which the terminal belongs, and processes the packet based on the security group policy. To enable the execution node to perceive the security group to which the terminal belongs, the security group determined by the authentication node needs to be synchronized to the execution node.

Currently, an inline security group tag (English: inline security group tag, inline SGT for short) technology is usually used to synchronize the security group determined by the authentication node to the execution node. Specifically, when the authentication performed by the authentication node on the terminal succeeds, the authentication node stores the security group to which the terminal belongs; when the authentication node receives the packet of the terminal, the authentication node generates a security group tag based on the security group to which the terminal belongs, where the security group tag is used to identify the security group to which the terminal belongs; the authentication node inserts the security group tag into a header of the packet, so that the packet carries the security group tag after the packet is extended; the authentication node sends, to the execution node, the packet that carries the security group tag; and when receiving the packet that carries the security group tag, the execution node parses the security group tag to determine the security group to which the terminal belongs, and processes the packet based on the security group policy.

When the foregoing method is used for information synchronization, the packet of the terminal needs to be privately extended, but many node devices do not support a function of privately extending the packet. Consequently, the method cannot be implemented to synchronize information. It can be learned that the method has poor compatibility and a narrow application range.

### SUMMARY

Embodiments of this application provide an information synchronization method, an authentication method, and an apparatus, so that a technical problem of relatively poor compatibility in a related technology can be resolved. The technical solutions are as follows:

According to a first aspect, an information synchronization method is provided, and the method includes:
receiving security group association information of a terminal that is sent by an authentication node, where the security group association information is used to indicate a mapping relationship between a network address of the terminal and a security group to which the terminal belongs;
determining at least one execution node including a target execution node, where the target execution node is configured to process a packet of the terminal based on a security group policy; and
sending the security group association information to the at least one execution node.

In the method provided in this embodiment, an achieved effect may include at least the following: A synchronization node synchronizes the security group association information from the authentication node to the execution node, so that the execution node can obtain the security group association information of the terminal, and the execution node can perceive, based on the security group association information, the security group to which the terminal belongs. In this way, the packet of the terminal can be processed based on the security group policy, thereby implementing separation between the authentication node and the execution node, breaking a constraint on networking, expanding an application range, and improving compatibility.

Optionally, the determining at least one execution node including a target execution node includes:
determining, from a correspondence between a network segment and an execution node and based on a target network segment to which the network address belongs, the target execution node corresponding to the target network segment.

An effect achieved in this optional manner may include at least the following: When receiving security group information of terminals on different network segments, the synchronization node may send each piece of security group information to an execution node on a corresponding network segment, so that a function that each execution node receives security group information of a terminal on a network segment of a local end can be implemented, thereby achieving a refined pushing effect, and avoiding running resource consumption caused when the execution node frequently receives the security group information. In addition, storage resources of the execution node can be saved, and a data amount of security group association information to be stored by a single execution node is prevented from being excessively large. In particular, in a scenario in which a quantity of terminals accessing a network is extremely large, a data amount of security group information to be synchronized by the synchronization node is extremely large, and running efficiency of an entire system can be improved when the security group information is sent in a refined manner.

Optionally, the determining at least one execution node including a target execution node includes:
determining each execution node in a network.

Optionally, before the determining, from a correspondence between a network segment and an execution node and based on a target network segment to which the network address belongs, the target execution node corresponding to the target network segment, the method further includes:
receiving a configuration instruction, where the configuration instruction is used to indicate the correspondence between a network segment and an execution node.

An effect achieved in this optional manner may include at least the following: A security group subscription configuration function can be supported, and a customization requirement of a user is met.

Optionally, the receiving security group association information of a terminal that is sent by an authentication node includes:
receiving first security group association information of a first terminal that is sent by a first authentication node, where the first security group association information is used to indicate a mapping relationship between a network address of the first terminal and a first security group to which the first terminal belongs; and
receiving second security group association information of a second terminal that is sent by a second authentication node, where the second authentication node is different from the first authentication node, and the second security group association information is used to indicate a mapping relationship between a network address of the second terminal and a second security group to which the second terminal belongs.

Correspondingly, the determining at least one execution node including a target execution node includes:
determining the at least one execution node including a first target execution node, where the first target execution node is configured to process, based on the security group policy, a packet transmitted between the first terminal and the second terminal.

Optionally, the receiving security group association information of a terminal that is sent by an authentication node includes:
receiving third security group association information of a third terminal that is sent by a third authentication node, where the third security group association information is used to indicate a mapping relationship between a network address of the third terminal and a third security group to which the third terminal belongs.

Correspondingly, the determining at least one execution node including a target execution node includes:
determining the at least one execution node including a second target execution node, where the second target execution node is configured to process, based on the security group policy, a packet transmitted between the third terminal and a network resource.

Optionally, the receiving security group association information of a terminal that is sent by an authentication node includes:
receiving the security group association information of the terminal that is sent by an authorization device; or
receiving the security group association information of the terminal that is sent by an authentication point device, where the security group association information of the terminal is sent by an authorization device to the authentication point device.

Optionally, the receiving security group association information of the terminal that is sent by an authorization device includes:
receiving the security group association information of the terminal that is sent by a first authorization device, where the first authorization device is an authorization device that supports a target function, and the target function is a function of sending the security group association information to the synchronization node.

Optionally, that the security group association information of the terminal is sent by an authorization device to the authentication point device includes:
security group information of the terminal is sent by a second authorization device to the authentication point device, and the second authorization device is an authorization device that does not support the target function.

Optionally, the method further includes:
receiving updated security group association information of the terminal that is sent by the authentication node; and
sending the updated security group association information to the at least one execution node; where
the updated security group association information is used to indicate a mapping relationship between an updated network address of the terminal and the security group, or the updated security group association information is used to indicate a mapping relationship between the network address of the terminal and an updated security group to which the terminal belongs, or the updated security group association information is used to indicate a mapping relationship between an updated network address of the terminal and an updated security group to which the terminal belongs.

An effect achieved in this optional manner may include at least the following: If a current location of the terminal changes, the network address of the terminal or the security group may be updated, so that the authentication node can update the security group association information as the current location of the terminal is updated, and report the updated security group association information to the synchronization node. In this way, the synchronization node can obtain the updated security group association information of the terminal, thereby ensuring accuracy of security group association information of the terminal that is stored by the synchronization node.

Optionally, before the sending the security group association information to the target execution node, the method further includes:
encoding the security group association information based on a structured data format.

Correspondingly, the sending the security group association information to the target execution node includes:
sending the encoded security group association information to the target execution node.

Optionally, the structured data format is a protocol buffer format.

Optionally, before the sending the security group association information to the target execution node, the method further includes:
compressing the security group association information.

Correspondingly, the sending the security group association information to the target execution node includes:
sending the compressed security group association information to the target execution node.

Optionally, the receiving security group association information of a terminal that is sent by an authentication node includes:
receiving encoded security group association information.

The method further includes:
decoding the encoded security group association information, to obtain the security group association information.

Optionally, the receiving security group association information of a terminal that is sent by an authentication node includes:
receiving compressed security group association information.

The method further includes:
decompressing the compressed security group association information, to obtain the security group association information.

Optionally, the receiving security group association information of an authentication node includes:
receiving the security group association information of the authentication node by using a first network connection, where the first network connection is at least one of a long connection and an encrypted channel.

Optionally, before the receiving the security group association information of the authentication node, the method further includes:
receiving a first network connection request of the authentication node, where the first network connection request is used to request to establish the first network connection; and
sending a first network connection response to the authentication node, where the first network connection response is used to confirm to establish the first network connection.

An effect achieved in a process of establishing the first network connection in the foregoing manner may include at least the following: The first network connection may be a bidirectional connection, to be specific, when data is transmitted between any authentication node and the synchronization node, similar to a mode of a client and a server, only one network connection needs to be configured for the authentication node and the synchronization node, thereby greatly reducing workload of a configuration operation and reducing subsequent operation and maintenance workload caused by maintenance of the network connection. In particular, in a scenario in which there are a relatively large quantity of authentication nodes, a connection also needs to be configured only between the authentication node and the synchronization node. Therefore, a full-mesh (English: full-mesh) connection configuration is not formed, thereby reducing deployment and maintenance workload.

Optionally, the sending the security group association information to the target execution node includes:
sending the security group association information of the target execution node by using a second network connection, where the second network connection is at least one of a long connection and an encrypted channel.

Optionally, before the receiving the security group association information of the authentication node, the method further includes:
receiving a second network connection request of the authentication node, where the second network connection request is used to request to establish the second network connection; and
sending a second network connection response to the authentication node, where the second network connection response is used to confirm to establish the second network connection.

An effect achieved when the second network connection is established in the foregoing manner may include at least the following: The second network connection may be a bidirectional connection, to be specific, when data is transmitted between the synchronization node and any execution node, similar to a mode of a client and a server, only one network connection needs to be configured for the synchronization node and the authentication node, thereby greatly reducing workload of a configuration operation and reducing subsequent operation and maintenance workload caused by maintenance of the network connection. In particular, in a scenario in which there are a relatively large quantity of execution nodes, a connection also needs to be configured only between the execution node and the synchronization node. Therefore, a full-mesh (English: full-mesh) connection configuration is not formed, thereby reducing deployment and maintenance workload.

Optionally, the method further includes:
receiving updated first security group association information of the first terminal that is sent by the first authentication node; and
sending the updated first security group association information to the at least one execution node; where
the updated first security group association information is used to indicate a mapping relationship between an updated network address of the first terminal and the first security group, or the updated first security group association information is used to indicate a mapping relationship between the network address of the first terminal and an updated first security group to which the first terminal belongs, or the updated first security group association information is used to indicate a mapping relationship between an updated network address of the first terminal and an updated first security group to which the first terminal belongs.

Optionally, the method further includes:
receiving updated second security group association information of the second terminal that is sent by the second authentication node; and
sending the updated second security group association information to the at least one execution node; where
the updated second security group association information is used to indicate a mapping relationship between an updated network address of the second terminal and the second security group, or the updated second security group association information is used to indicate a mapping relationship between the network address of the second terminal and an updated second security group to which the second terminal belongs, or the updated second security group association information is used to indicate a mapping relationship between an updated network address of the second terminal and an updated second security group to which the second terminal belongs.

According to a second aspect, a packet processing method is provided, and the method includes:
receiving security group association information of a terminal that is sent by a synchronization node, where the synchronization node is configured to synchronize the security group association information from an authentication node to an execution node, and the security group association information is used to indicate a mapping relationship between a network address of the terminal and a security group to which the terminal belongs;
receiving a packet of the terminal;
obtaining, from the security group association information and based on the network address carried in the packet, the security group corresponding to the network address; and
processing the packet based on a security group policy that matches the security group.

In the method provided in this embodiment, an achieved effect may include at least the following: The execution node may obtain the security group association information of the terminal by using the security group association information delivered by the synchronization node, and therefore can perceive the security group to which the terminal belongs; and when traffic of the terminal arrives at the execution node, the execution node may process the packet of the terminal based on the security group policy, thereby implementing separation between the authentication node and the execution node, breaking a constraint on networking, expanding an application range, and improving compatibility.

Optionally, the receiving security group association information of a terminal that is sent by a synchronization node includes:
receiving first security group association information of the first terminal that is sent by the synchronization node, where the synchronization node is configured to synchronize the first security group association information from a first authentication node to the execution node, and the first security group association information is used to indicate a mapping relationship between a network address of the first terminal and a first security group to which the first terminal belongs; and
receiving second security group association information of the second terminal that is sent by the synchronization node, where the synchronization node is configured to synchronize the second security group association information from a second authentication node to the execution node, the second authentication node is different from the first authentication node, and the second security group association information is used to indicate a mapping relationship between a network address of the second terminal and a second security group to which the second terminal belongs.

Correspondingly, the receiving a packet of the terminal includes:
receiving a packet transmitted between the first terminal and the second terminal.

The processing the packet based on a security group policy that matches the security group includes:
processing the packet based on a security group policy that matches both the first security group and the second security group.

Optionally, the obtaining, from the security group association information and based on the network address carried in the packet, the security group corresponding to the network address includes:
obtaining, from the first security group association information and based on a source network address carried in the packet, the first security group corresponding to the source network address, where the source network address is the network address of the first terminal; and
obtaining, from the second security group association information and based on a destination network address carried in the packet, the second security group corresponding to the destination network address, where the destination network address is the network address of the second terminal.

Optionally, the receiving security group association information of a terminal that is sent by a synchronization node includes:
receiving third security group association information of a third terminal that is sent by the synchronization node, where the third security group association information is used to indicate a mapping relationship between a network address of the third terminal and a third security group to which the third terminal belongs.

The receiving a packet of the terminal includes:
receiving a packet transmitted between the third terminal and a network resource.

Correspondingly, the processing the packet based on a security group policy that matches the security group includes:
processing the packet based on a security group policy that matches both the third security group and a fourth security group to which the network resource belongs.

Optionally, the method further includes:
receiving updated security group association information of the terminal that is sent by the synchronization node; and
performing, based on the updated security group association information of the terminal, steps of obtaining the security group and processing the packet; where
the updated security group association information is used to indicate a mapping relationship between an updated network address of the terminal and the security group, or the updated security group association information is used to indicate a mapping relationship between the network address of the terminal and an updated security group to which the terminal belongs, or the updated security group association information is used to indicate a mapping relationship between an updated network address of the terminal and an updated security group to which the terminal belongs.

Optionally, before the receiving security group association information of a terminal that is sent by a synchronization node, the method further includes:
establishing a second network connection to the synchronization node, where the second network connection is at least one of a long connection, an encrypted channel, and connection multiplexing.

Correspondingly, the receiving security group association information of a terminal that is sent by a synchronization node includes:
receiving, by using the second network connection, the security group association information of the terminal that is sent by the synchronization node.

Optionally, the receiving security group association information of a terminal that is sent by a synchronization node includes:
receiving encoded security group association information of the terminal that is sent by the synchronization node.

The method further includes:
decoding the encoded security group association information, to obtain the security group association information.

Optionally, the receiving security group association information of a terminal that is sent by a synchronization node includes:
receiving compressed security group association information.

The method further includes:
decompressing the compressed security group association information, to obtain the security group association information.

Optionally, the method further includes:
receiving updated first security group association information of the first terminal that is sent by the synchronization node; and
performing, based on the updated first security group association information of the first terminal, steps of obtaining the first security group and processing the packet; where
the updated first security group association information is used to indicate a mapping relationship between an updated network address of the first terminal and the first security group, or the updated first security group association information is used to indicate a mapping relationship between the network address of the first terminal and an updated first security group to which the first terminal belongs, or the updated first security group association information is used to indicate a mapping relationship between an updated network address of the first terminal and an updated first security group to which the first terminal belongs.

Optionally, the method further includes:
receiving updated second security group association information of the second terminal that is sent by the synchronization node; and
performing, based on the updated second security group association information of the second terminal, steps of obtaining the second security group and processing the packet; where
the updated second security group association information is used to indicate a mapping relationship between an updated network address of the second terminal and the second security group, or the updated second security group association information is used to indicate a mapping relationship between the network address of the second terminal and an updated second security group to which the second terminal belongs, or the updated second security group association information is used to indicate a mapping relationship between an updated network address of the second terminal and an updated second security group to which the second terminal belongs.

According to a third aspect, an authentication method is provided, and the method includes:
receiving an authentication request of a terminal;
authenticating the terminal to obtain a security group to which the terminal belongs;
obtaining security group association information of the terminal based on a network address of the terminal and the security group, where the security group association information is used to indicate a mapping relationship between the network address and the security group to which the terminal belongs; and
sending the security group association information to a synchronization node, where the synchronization node is configured to synchronize the security group association information to at least one execution node including a target execution node, and the target execution node is configured to process a packet of the terminal based on a security group policy.

In the method provided in this embodiment, an achieved effect may include at least the following: An authentication node obtains the security group association information of the terminal based on the network address of the terminal and the security group, and sends the security group association information to the synchronization node, so that the synchronization node can synchronize the security group association information of the terminal to the execution node, and the execution node can obtain the security group association information of the terminal, and therefore the execution node can perceive, based on the security group association information, the security group to which the terminal belongs. In this way, the packet of the terminal can be processed based on the security group policy, thereby implementing separation between the authentication node and the execution node, breaking a constraint on networking, expanding an application range, and improving compatibility.

Optionally, the sending the security group association information to a synchronization node includes:
sending the security group association information to an authentication point device, where the security group association information is to be sent by the authentication point device to the synchronization node.

Optionally, the method further includes:
obtaining an updated network address of the terminal;
obtaining updated security group association information of the terminal based on the updated network address and the security group, where the updated security group association information is used to indicate a mapping relationship between the updated network address of the terminal and the security group; and
sending the updated security group association information of the terminal to the synchronization node.

Optionally, the method further includes:
obtaining an updated security group to which the terminal belongs;
obtaining updated security group association information of the terminal based on the network address and the updated security group to which the terminal belongs, where the updated security group association information is used to indicate a mapping relationship between the network address of the terminal and the updated security group to which the terminal belongs; and
sending the updated security group association information of the terminal to the synchronization node.

Optionally, the method further includes:
obtaining an updated network address of the terminal and an updated security group to which the terminal belongs;
obtaining updated security group association information of the terminal based on the updated network address of the terminal and the updated security group to which the terminal belongs, where the updated security group association information is used to indicate a mapping relationship between the updated network address of the terminal and the updated security group to which the terminal belongs; and
sending the updated security group association information of the terminal to the synchronization node.

Optionally, the method is applied to at least one of an authorization device and the authentication point device.

Optionally, the authorization device is an authentication, authorization, and accounting AAA server.

Optionally, the method is applied to a second authorization device, the second authorization device is an authorization device that does not support a target function, and the target function is a function of sending the security group association information to the synchronization node.

Optionally, the method is applied to a first authorization device, and the first authorization device is an authorization device that supports a target function.

Optionally, the receiving security group association information of a terminal that is sent by a synchronization node includes:
receiving encoded security group association information of the terminal that is sent by the synchronization node.

The method further includes:
decoding the encoded security group association information, to obtain the security group association information.

Optionally, the receiving security group association information of a terminal that is sent by a synchronization node includes:
receiving compressed security group association information.

The method further includes:
decompressing the compressed security group association information, to obtain the security group association information.

Optionally, before the sending the security group association information to a synchronization node, the method further includes:
establishing a first network connection to the synchronization node, where the first network connection is at least one of a long connection, an encrypted channel, and connection multiplexing.

Correspondingly, the sending the security group association information to a synchronization node includes:
sending the security group association information to the synchronization node by using the first network connection.

According to a fourth aspect, an information synchronization apparatus is provided, and the apparatus is configured to perform the foregoing information synchronization method. Specifically, the information synchronization apparatus includes a function module configured to perform the information synchronization method according to any one of the first aspect and the optional manners of the first aspect.

According to a fifth aspect, a packet processing apparatus is provided, and the apparatus is configured to perform the foregoing packet processing method. Specifically, the packet processing apparatus includes a function module configured to perform the packet processing method according to any one of the second aspect and the optional manners of the second aspect.

According to a sixth aspect, an authentication apparatus is provided, and the apparatus is configured to perform the foregoing authentication method. Specifically, the authentication apparatus includes a function module configured to perform the authentication method according to any one of the third aspect and the optional manners of the third aspect.

According to a seventh aspect, a computer device is provided, where the computer device includes a processor and a memory, the memory stores at least one instruction, and the instruction is loaded and executed by the processor to implement an operation performed in the information synchronization method according to any one of the first aspect and the optional manners of the first aspect.

According to an eighth aspect, a computer device is provided, where the computer device includes a processor and a memory, the memory stores at least one instruction, and the instruction is loaded and executed by the processor to implement an operation performed in the packet processing method according to any one of the second aspect and the optional manners of the second aspect.

According to a ninth aspect, a computer device is provided, where the computer device includes a processor and a memory, the memory stores at least one instruction, and the instruction is loaded and executed by the processor to implement an operation performed in the authentication method according to any one of the third aspect and the optional manners of the third aspect.

According to a tenth aspect, a computer-readable storage medium is provided, where the storage medium stores at least one instruction, and the instruction is loaded and executed by the processor to implement an operation performed in the information synchronization method according to any one of the first aspect and the optional manners of the first aspect.

According to an eleventh aspect, a computer-readable storage medium is provided, where the storage medium stores at least one instruction, and the instruction is loaded and executed by the processor to implement an operation performed in the packet processing method according to any one of the second aspect and the optional manners of the second aspect.

According to a twelfth aspect, a computer-readable storage medium is provided, where the storage medium stores at least one instruction, and the instruction is loaded and executed by the processor to implement an operation performed in the authentication method according to any one of the third aspect and the optional manners of the third aspect.

According to a thirteenth aspect, a computer program product including an instruction is provided, and when the computer program product runs on a computer device, the computer device can be enabled to implement an operation performed in the information synchronization method according to any one of the first aspect and the optional manners of the first aspect.

According to a fourteenth aspect, a computer program product including an instruction is provided, and when the computer program product runs on a computer device, the computer device can be enabled to implement an operation performed in the packet processing method according to any one of the second aspect and the optional manners of the second aspect.

According to a fifteenth aspect, a computer program product including an instruction is provided, and when the computer program product runs on a computer device, the computer device can be enabled to implement an operation performed in the authentication method according to any one of the third aspect and the optional manners of the third aspect.

According to a sixteenth aspect, a computer device cluster is provided, and includes at least one computer device, each computer device includes a processor and a memory, and a processor of the at least one computer device is configured to perform an operation performed to implement the information synchronization method according to any one of the first aspect and the optional manners of the first aspect.

According to a seventeenth aspect, a computer device cluster is provided, and includes at least one computer device, each computer device includes a processor and a memory, and a processor of the at least one computer device is configured to perform an operation performed to implement the packet processing method according to any one of the second aspect and the optional manners of the second aspect.

According to an eighteenth aspect, a computer device cluster is provided, and includes at least one computer device, each computer device includes a processor and a memory, and a processor of the at least one computer device is configured to perform an operation performed to implement the authentication method according to any one of the third aspect and the optional manners of the third aspect.

According to a nineteenth aspect, a service processing system is provided, and in a possible implementation, the system includes the information synchronization apparatus according to the fourth aspect, the packet processing apparatus according to the fifth aspect, and the authentication apparatus according to the sixth aspect.

In another possible implementation, the system includes the computer device according to the seventh aspect, the computer device according to the eighth aspect, and the computer device according to the ninth aspect.

In another possible implementation, the system includes the computer device according to the sixteenth aspect, the computer device according to the seventeenth aspect, and the computer device according to the eighteenth aspect.

According to a twentieth aspect, a chip is provided, where the chip includes a processor and/or a program instruction, and when the chip runs, an operation performed in the information synchronization method according to any one of the first aspect and the optional manners of the first aspect is implemented.

According to a twenty-first aspect, a chip is provided, where the chip includes a processor and/or a program instruction, and when the chip runs, an operation performed in the packet processing method according to any one of the second aspect and the optional manners of the second aspect is implemented.

According to a twenty-second aspect, a chip is provided, where the chip includes a processor and/or a program instruction, and when the chip runs, an operation performed in the authentication method according to any one of the third aspect and the optional manners of the third aspect is implemented.

### BRIEF DESCRIPTION OF DRAWINGS

FIG. 1 is an architectural diagram of an implementation environment according to an embodiment of this application;
FIG. 2 is an architectural diagram of another implementation environment according to an embodiment of this application;
FIG. 3 is an architectural diagram of another implementation environment according to an embodiment of this application;
FIG. 4 is an architectural diagram of another implementation environment according to an embodiment of this application;
FIG. 5 is an architectural diagram of another implementation environment according to an embodiment of this application;
FIG. 6 is a schematic structural diagram of a computer device according to an embodiment of this application;
FIG. 7 is a system architectural diagram of a computer device cluster according to an embodiment of this application;
FIG. 8 is a system architectural diagram of another computer device cluster according to an embodiment of this application;
FIG. 9 is a flowchart of an authentication method according to an embodiment of this application;
FIG. 10 is a flowchart of an information synchronization method according to an embodiment of this application;
FIG. 11 is a schematic diagram of an information synchronization method according to an embodiment of this application;
FIG. 12 is a flowchart of a packet processing method according to an embodiment of this application;
FIG. 13A and FIG. 13B are a flowchart of a service processing method according to an embodiment of this application;
FIG. 14 is a schematic diagram of an information synchronization method according to an embodiment of this application;
FIG. 15 is a flowchart of a packet processing method according to an embodiment of this application;
FIG. 16A to FIG. 16C are a flowchart of a service processing method according to an embodiment of this application;
FIG. 17 is a schematic diagram of an information synchronization method according to an embodiment of this application;
FIG. 18 is a flowchart of a packet processing method according to an embodiment of this application;
FIG. 19A and FIG. 19B are a flowchart of a service processing method according to an embodiment of this application;
FIG. 20A and FIG. 20B are a flowchart of a service processing method according to an embodiment of this application;
FIG. 21A and FIG. 21B are a flowchart of a service processing method according to an embodiment of this application;
FIG. 22 is a schematic structural diagram of an information synchronization apparatus according to an embodiment of this application;
FIG. 23 is a schematic structural diagram of a packet processing apparatus according to an embodiment of this application; and
FIG. 24 is a schematic structural diagram of an authentication apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

Terms involved in this application are explained below.

A security group is one or more terminals and/or one or more network resources that are described or organized in a form of a group. When being expressed in a mathematical form, any security group may include n terminals, or any security group may include m network resources, or any security group may include n terminals and m network resources, where n and m are positive integers. The security group may correspond to a security group policy, and a packet sent by the terminal and/or the network resource in the security group, a packet received by the terminal and/or the network resource in the security group, and a packet transmitted between terminals and/or network resources in different security groups may be processed based on the security group policy corresponding to the security group.

The terminal is also referred to as a user terminal or user equipment (User Equipment, UE for short). For example, the terminal may include a mobile phone, a tablet computer, a personal computer, a notebook computer, and a telephone. Optionally, the terminal may be a mobile terminal. A location of the mobile terminal may change. As the location of the mobile terminal changes, a network address of the mobile terminal may change. The mobile terminal may include a mobile phone, a tablet computer, a notebook computer, and the like.

The network resource may include a computing resource, a storage resource, a network environment resource, a database, a network security resource, an application service resource, an internet of things resource, a machine learning resource, a software development resource, and the like. For example, the computing resource may include a server, an image management service, a container instance, and the like. The storage resource may include an object storage service, a hard disk, and the like. A network address of the network resource may be fixed. Correspondingly, the network resource may be referred to as a static resource. The network resource may be a local resource, or may be a cloud resource. The cloud resource may be a resource provided by a cloud computing service. For example, the cloud resource may be an elastic cloud server, virtual private cloud (English: Virtual Private Cloud), an object storage service (English: Object-Based Storage System, OBS for short), a distributed cache service, a cloud database, application performance management (English: Application Performance Management, APM for short), a blockchain service (English: Blockchain Service), a machine learning (English: Machine Learning, ML for short) service, a distributed message service, an image recognition service, or a natural language processing (English: natural language processing, NLP for short) service.

The security group policy is used to process a packet of the terminal, to control access rights of the terminal or quality of service provided for the terminal. The security group policy may include at least one of an access rights control policy and an experience assurance policy.

The access rights control policy is used to control behavior of accessing a terminal and/or a network resource in any security group by a terminal and/or a network resource in another security group. For example, the access rights control policy may be used to control behavior of accessing a terminal 2 in a security group b by a terminal a in a security group 1. The access rights control policy may include at least one of an access allowed policy and an access prohibited policy.

The access allowed policy is used to allow the behavior of accessing a terminal and/or a network resource in any security group by a terminal and/or a network resource in another security group. When an execution node processes a packet based on the access allowed policy, the execution node forwards the packet to an accessed device, so that an access device can send the packet to the accessed device, thereby implementing a function of allowing the access device to access the accessed device. For example, if it is assumed that the terminal a in the security group 1 is to access the terminal b in the security group 2, when receiving a packet sent by the terminal a to the terminal b, the execution node forwards the packet of the terminal a to the terminal b if the access allowed policy is matched during matching of security group policies of the security group 1 and the security group 2.

The access prohibited policy is used to prohibit the behavior of accessing a terminal and/or a network resource in any security group by a terminal and/or a network resource in another security group. When an execution node processes a packet based on the access prohibited policy, the execution node discards the packet, so that an access device cannot send the packet to an accessed device, thereby implementing a function of prohibiting the access device from accessing the accessed device. For example, if it is assumed that the terminal a in the security group 1 is to access the terminal b in the security group 2, when receiving a packet sent by the terminal a to the terminal b, the execution node discards the packet of the terminal a if the access prohibited policy is matched during matching of security group policies of the security group 1 and the security group 2.

The experience assurance policy is used to control the quality of service provided for the terminal. The experience assurance policy may include at least one of a rate limiting policy, a preferential scheduling policy, and a gateway preferential access policy.

The rate limiting policy is used to control traffic of the terminal. For example, the rate limiting policy may include a bandwidth threshold of the terminal, and bandwidth of the terminal may be controlled within a range that does not exceed the bandwidth threshold, to avoid network congestion.

The preferential scheduling policy is used to control a priority of forwarding the packet of the terminal. For example, the preferential scheduling policy may include a forwarding priority corresponding to the terminal, and the execution node may forward the packet of the terminal based on the forwarding priority. For example, if it is assumed that the terminal a in the security group 1 is to access the terminal b in the security group 2, when receiving a packet sent by the terminal a to the terminal b, the execution node preferentially forwards the packet of the terminal a if a preferential scheduling policy of a high priority is matched during matching of security group policies of the security group 1 and the security group 2.

The gateway preferential access policy is used to control a priority of an access gateway of the terminal. For example, the gateway preferential access policy may include the priority of the access gateway of the terminal. If a priority of an access gateway of a terminal is relatively high, the execution node may preferentially access the terminal to the gateway.

An authentication node is configured to authenticate the terminal, and determine a security group to which the terminal belongs. Optionally, the authentication node may include at least one of an authentication point device and an authorization device. The authorization device and the authentication point device may communicate with each other, to complete an authentication process through interaction.

The authentication point device is configured to: in response to an authentication request of the terminal, send the authentication request to the authorization device, receive an authentication result of the authorization device, and determine, based on the authentication result, whether to allow the terminal to access a network. For example, a physical entity of the authentication point device may include a network device such as a wireless access point (Wireless Access Point, AP for short), a firewall, a router, or a switch. Specifically, the authentication point device may be an access stratum switch. The authentication point device may be locally deployed, or may be deployed at a cloud side. For example, the authentication point device may be a virtualized resource provided by the cloud computing service. The authentication point device may keep communication with the authorization device by using a network protocol. For example, the authentication point device may communicate with the authorization device by using a remote authentication dial in user service (Remote Authentication Dial In User Service, Radius for short) protocol.

For a specific form of the authentication point device, optionally, processing logic of the authentication point device may be encapsulated into a client of any software that has an authentication function, and the client may be installed on one or more network devices at an access stratum, so that the one or more network devices become the authentication point device after running the client.

The authorization device is configured to: receive an authentication request of the authentication point device, authenticate the terminal based on the authentication request, and send an authentication result to the authentication point device. In addition, the authorization device may determine, in an authentication process or after the authentication succeeds, the security group to which the terminal belongs. Optionally, the authorization device may be a controller node in the network, may be a core of authentication, authorization, and service policy management in the network, and may interact with the authentication point device to complete functions of authenticating the terminal and delivering a policy. The authorization device may keep communication with the authentication point device by using a network protocol. For example, the authorization device may communicate with the authentication device by using the radius protocol.

For a specific form of the authorization device, optionally, the authorization device may be a server, for example, the authorization device may be an authentication, authorization, and accounting (Authentication Authorization Accounting, AAA or 3A for short) server, and the authorization device may be deployed in a data center of a campus network. Optionally, the authorization device may be implemented by software. For example, processing logic of the authorization device may be a software package. The software package may be installed on one or more physical servers, so that the one or more physical servers implement a function of the authorization device when running the software package.

The execution node may also be referred to as an execution point device or a policy execution point device. The execution node is configured to process the packet of the terminal based on the security group policy.

For a specific form of the execution node, optionally, a physical entity of the execution node may include a switch, a firewall, a router, a wireless controller (Wireless Access Point Controller, AC for short), and the like. Optionally, processing logic of the execution node may be encapsulated into a client of any software that has a security group policy execution function. The client may be installed on one or more network devices at a convergence layer or a core layer, so that the one or more network devices become the execution node after running the client. The execution node may be located locally, or may be located at a cloud side. For example, the execution node may be a virtualized resource provided by the cloud computing service.

A synchronization node is configured to synchronize security group association information of the terminal to at least one execution node. In this way, both the authentication node and the execution node may store the security group association information of the terminal, so that on a network forwarding plane, the execution node may also hold authorization security group information of the terminal, and the execution node matches a corresponding security group policy for the packet of the terminal based on the authorization security group information of the terminal, and then processes the packet based on the security group policy.

For a specific form of the synchronization node, optionally, the synchronization node may be implemented by software. For example, the synchronization node may be implemented by one or more of an image, an application, a service, a micro service, a module, a submodule, a class, and a function. For example, processing logic of the synchronization node may be encapsulated into a software package. Any one or more devices may be used as the synchronization node when running the software package, to implement a function of the synchronization node. For example, the software package may be installed on a server cluster. Therefore, when the server cluster runs the software package, the server cluster may be used as the synchronization node. Certainly, cluster installation is merely an example. The software package may be installed on a single server. In this case, when the server runs the software package, the server may be used as the synchronization node. Certainly, the synchronization node may also be implemented by hardware. For example, processing logic of the synchronization node may be encapsulated on one or more chips. Any one or more devices may be used as the synchronization node when running the one or more chips, to implement a function of the synchronization node. The chip may be a single-chip microcomputer, a programmable logic device, another processor, or the like. Optionally, a physical entity of the synchronization node may include a server, a personal computer, a firewall, a router, a switch, and the like. Optionally, the synchronization node may be deployed locally, or may be deployed at a cloud side. For example, the synchronization node may be deployed in a data center of a campus network. A geographical location of the synchronization node is not limited in this embodiment. Optionally, the synchronization node may be independently deployed. For example, the synchronization node may be one or more dedicated physical entities, and the physical entity does not need to provide a function of a node device other than the synchronization node. Certainly, the synchronization node may be alternatively deployed together with another node device. For example, one or more physical entities may simultaneously provide functions of the synchronization node and the node device other than the synchronization node. A manner of deploying the synchronization node is not limited in this embodiment. Optionally, the synchronization node may be provided as a single machine, a cluster, a distributed system, or a primary/secondary system. A running manner of the synchronization node is not limited in this application.

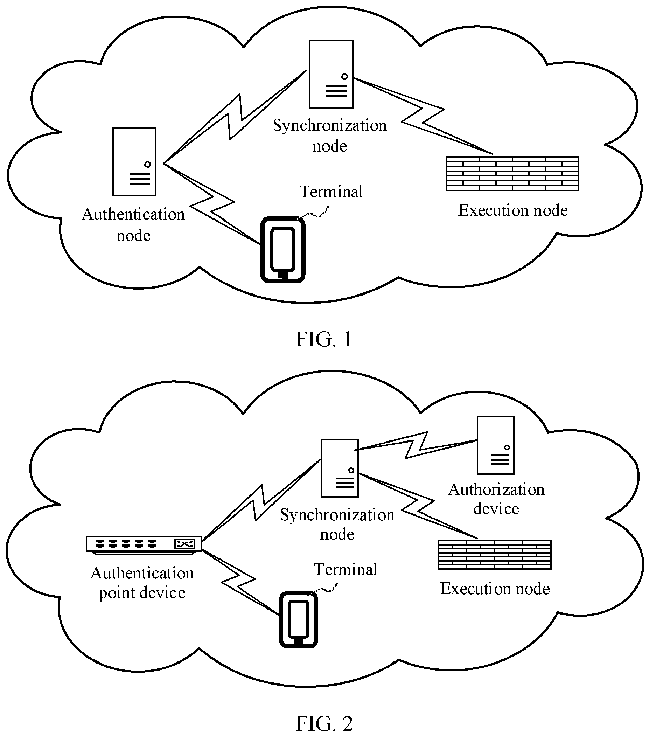

FIG. 1 is an architectural diagram of an implementation environment according to an embodiment of this application. The implementation environment includes a terminal, an authentication node, a synchronization node, and an execution node, and different devices in the implementation environment may be connected by using a network. The authentication node may be configured to perform an authentication method in the following embodiments. The synchronization node may be configured to perform an information synchronization method in the following embodiments. The execution node may be configured to perform a packet processing method in the following embodiments. The terminal, the authentication node, the synchronization node, and the execution node may perform a service processing method in the following embodiments through interaction.

Authentication nodes in the implementation environment provided in FIG. 1 may be classified into an authentication point device and an authorization device. Different steps performed by the authentication node may be separately performed by the authentication point device and the authorization device, in other words, the authentication point device and the authorization device may jointly implement a function of the authentication node through information exchange. Specifically, FIG. 2 is an architectural diagram of another implementation environment according to an embodiment of this application. The implementation environment includes a terminal, an authentication point device, a synchronization node, an authorization device, and an execution node. The authentication point device and the authorization device may perform an authentication method in the following embodiments through interaction. The terminal, the authentication point device, the synchronization node, the authorization device, and the execution node may perform a service processing method in the following embodiments through interaction.

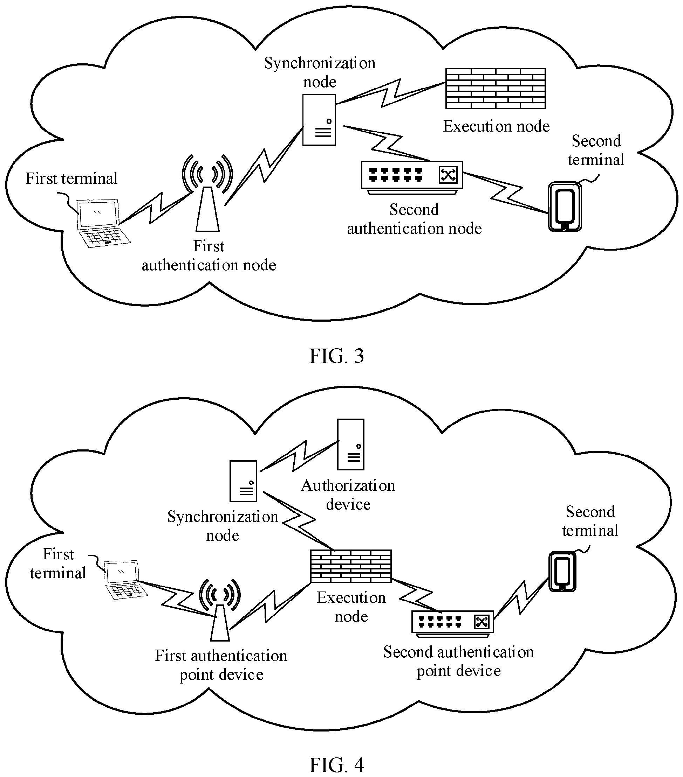

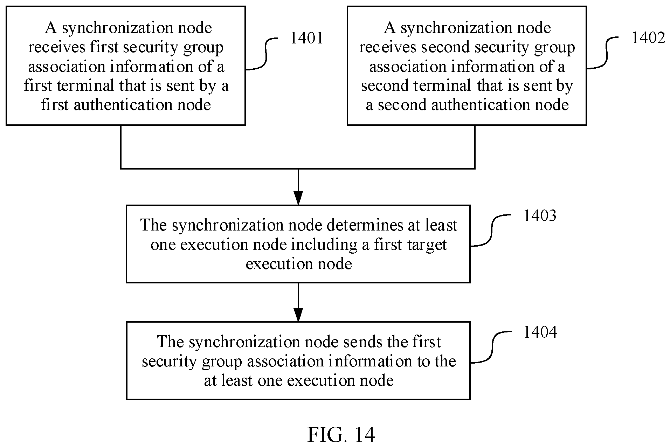

In the implementation environment provided in FIG. 1, there may be a plurality of authentication nodes and a plurality of terminals, and authentication may be performed on different terminals by using different authentication nodes. Specifically, FIG. 3 is an architectural diagram of another implementation environment according to an embodiment of this application. The implementation environment includes a first terminal, a second terminal, a first authentication node, a second authentication node, a synchronization node, and an execution node. The first terminal is connected to the first authentication node by using a network, the second terminal is connected to the second authentication node by using the network, and both the first authentication node and the second authentication node may be connected to the synchronization node by using the network. The first terminal, the second terminal, the first authentication node, the second authentication node, the synchronization node, and the execution node may perform an information synchronization method in the following embodiments through interaction. The following embodiments of FIG. 14 to FIG. 16A to FIG. 16C may be applied to the implementation environment shown in FIG. 3.

Authentication nodes in the implementation environment provided in FIG. 3 may also be classified into an authentication point device and an authorization device. Specifically, FIG. 4 is an architectural diagram of another implementation environment according to an embodiment of this application. The implementation environment includes a first terminal, a second terminal, a first authentication point device, a second authentication point device, a synchronization node, an execution node, and an authorization device.

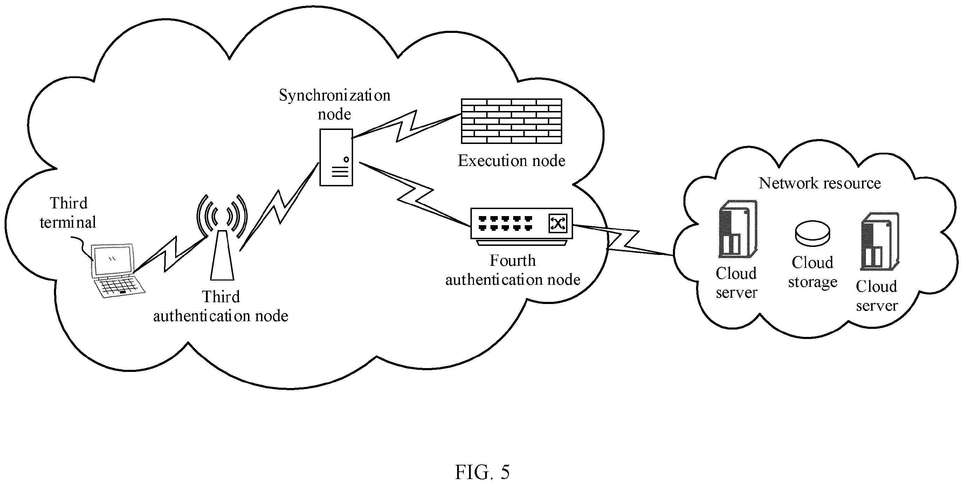

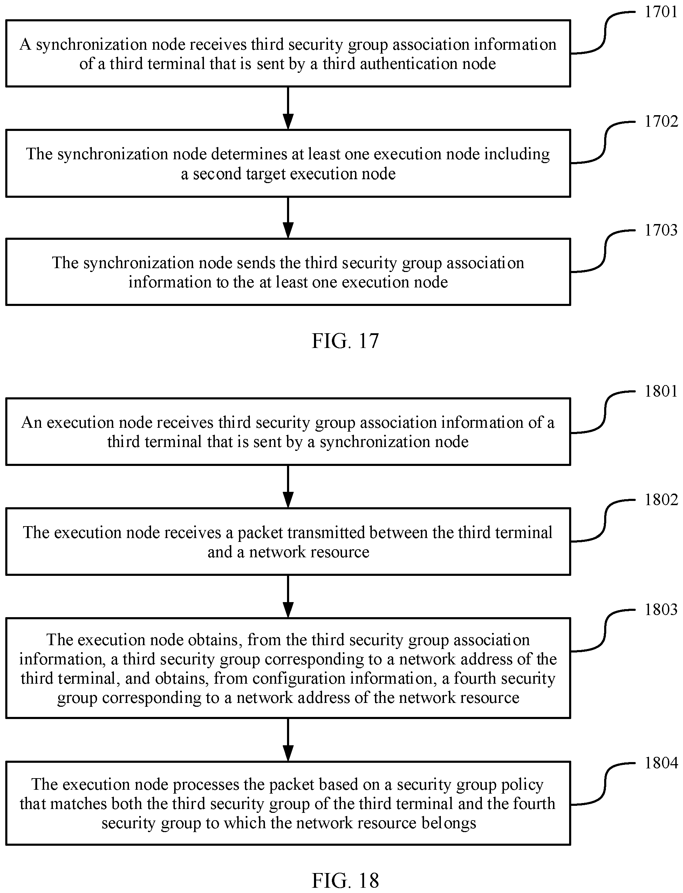

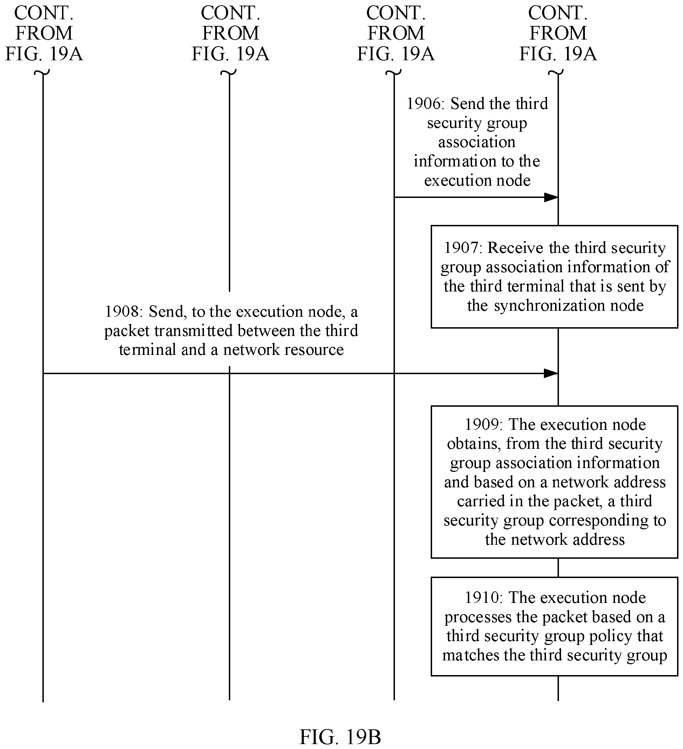

The implementation environment provided in FIG. 1 may further include one or more network resources. Specifically, FIG. 5 is an architectural diagram of another implementation environment according to an embodiment of this application. The implementation environment includes a terminal, an authentication node, a synchronization node, an execution node, and a network resource. The following embodiments of FIG. 17 to FIG. 19A and FIG. 19B may be applied to the implementation environment shown in FIG. 5. Correspondingly, the terminal in the implementation environment in FIG. 5 may be referred to as a third terminal, and authentication nodes in the implementation environment in FIG. 5 may be classified into a third authentication node and a fourth authentication node.

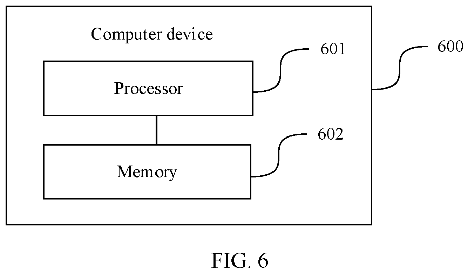

FIG. 6 is a schematic structural diagram of a computer device according to an embodiment of this application. The computer device 600 may be provided as at least one of a synchronization node, an execution node, and an authentication node in the following method embodiments.

The computer device 600 may vary greatly due to a configuration or performance difference, and may include one or more processors (English: central processing units, CPU for short) 601 and one or more memories 602. The memory 602 stores at least one instruction, and the at least one instruction is loaded and executed by the processor 601 to implement at least one of an information synchronization method, a packet processing method, and an authentication method provided in the following method embodiments. Certainly, the computer device may further have components such as a wired or wireless network interface and an input/output interface, to perform input/output. The computer device may further include other components configured to implement a device function. Details are not described herein. The computer device 600 may be a computer device in a cloud environment, a computer device in an edge environment, or a computer device in a terminal environment. This is not limited herein.

An operating system running on the computer device 600 may be a Linux operating system, and may certainly be another operating system, such as a Windows operating system. This is not limited in this embodiment.

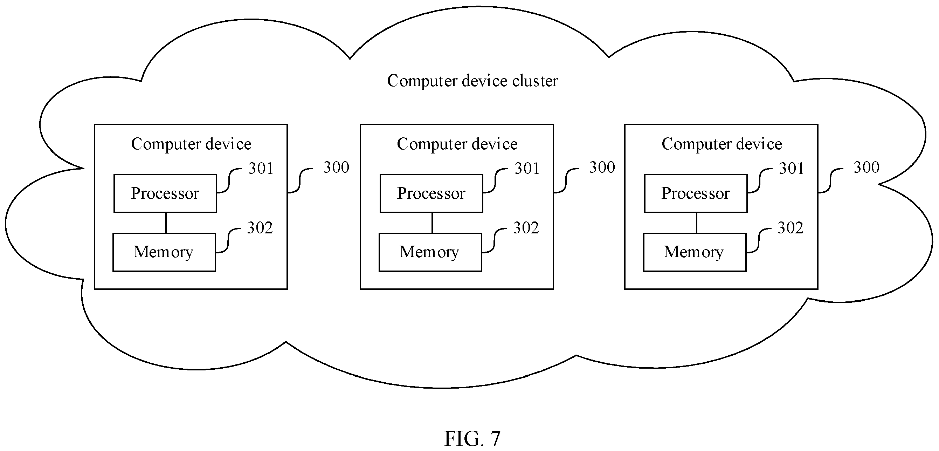

FIG. 7 is a system architectural diagram of a computer device cluster according to an embodiment of this application. The computer device cluster may be provided as at least one of a synchronization node, an execution node, and an authentication node in the following method embodiments.

As shown in FIG. 7, the computer device cluster includes at least one computer device 700. Each computer device 700 may perform any one or more steps in an information synchronization method, a packet processing method, and an authentication method provided in the following method embodiments. Different steps may be performed by different computer devices 700. A structure of each computer device 700 is the same as a structure of the computer device 600 in the embodiment of FIG. 6. Specifically, each computer device 700 may vary greatly due to a configuration or performance difference, and may include one or more processors 701 and one or more memories 702. The memory 702 stores at least one instruction, and the at least one instruction is loaded and executed by the processor 701 to implement any one or more steps in any one of an information synchronization method, a packet processing method, and an authentication method provided in the following method embodiments. Each computer device 700 may be a computer device in a cloud environment, a computer device in an edge environment, or a computer device in a terminal environment. This is not limited herein.

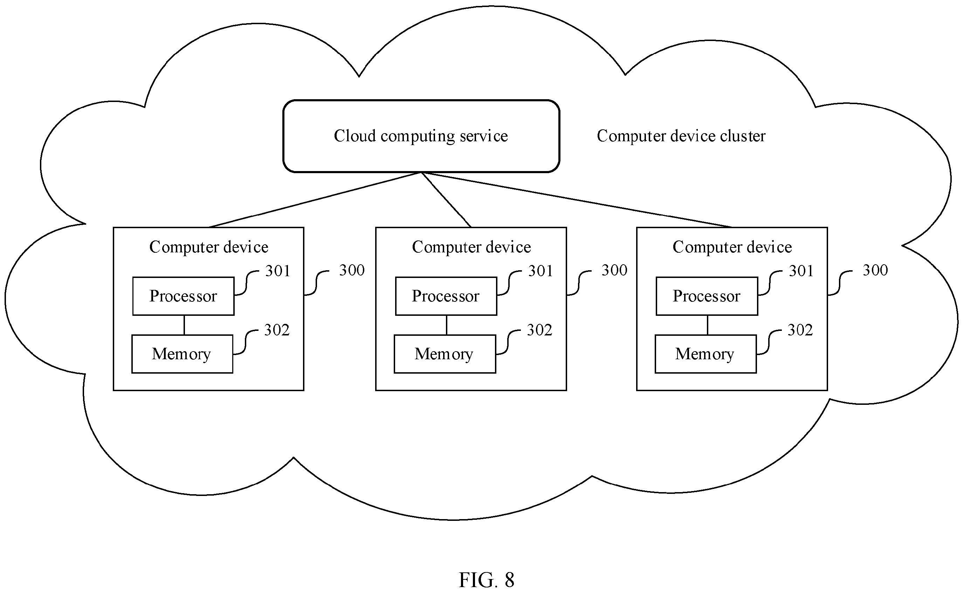

FIG. 8 is a system architectural diagram of another computer device cluster according to an embodiment of this application. The computer device cluster may be provided as at least one of a synchronization node, an execution node, and an authentication node in the following method embodiments.

As shown in FIG. 8, the computer device cluster includes a cloud computing system and at least one computer device 800. The cloud computing system may perform any one or more steps in an information synchronization method, a packet processing method, or an authentication method provided in the following method embodiments. Each computer device 800 may also perform any one or more steps in any one of the information synchronization method, the packet processing method, and the authentication method provided in the following method embodiments. The cloud computing system in FIG. 8 may be implemented by using a server cluster at a cloud side. The cloud computing system may extend a computing capability of an operation by using a virtualization technology, to share software and hardware resources and information. The software and hardware resources and information are provided for each node device in the cloud computing system as required, so that each node device performs maximum performance. A structure of each computer device 800 is the same as a structure of the computer device 600 in the embodiment of FIG. 6. Each computer device 800 may be a computer device in a cloud environment, a computer device in an edge environment, or a computer device in a terminal environment. This is not limited herein.

In an example embodiment, a computer-readable storage medium is further provided, for example, a memory including an instruction. The instruction may be loaded and executed by a processor of a synchronization node to complete an information synchronization method in the following embodiments. For example, the computer-readable storage medium may be a read-only memory (Read-Only Memory, ROM for short), a random access memory (Random Access Memory, RAM), a compact disc read-only memory (Compact Disc Read-Only Memory, CD-ROM for short), a magnetic tape, a floppy disk, or an optical data storage device.

In an example embodiment, a computer-readable storage medium is further provided, for example, a memory including an instruction. The instruction may be loaded and executed by a processor of an execution node to complete a packet processing method in the following embodiments. For example, the computer-readable storage medium may be a ROM, a RAM, a CD-ROM, a magnetic tape, a floppy disk, or an optical data storage device.

In an example embodiment, a computer-readable storage medium is further provided, for example, a memory including an instruction. The instruction may be loaded and executed by a processor of an authentication node to complete an authentication method in the following embodiments. For example, the computer-readable storage medium may be a ROM, a RAM, a CD-ROM, a magnetic tape, a floppy disk, or an optical data storage device.

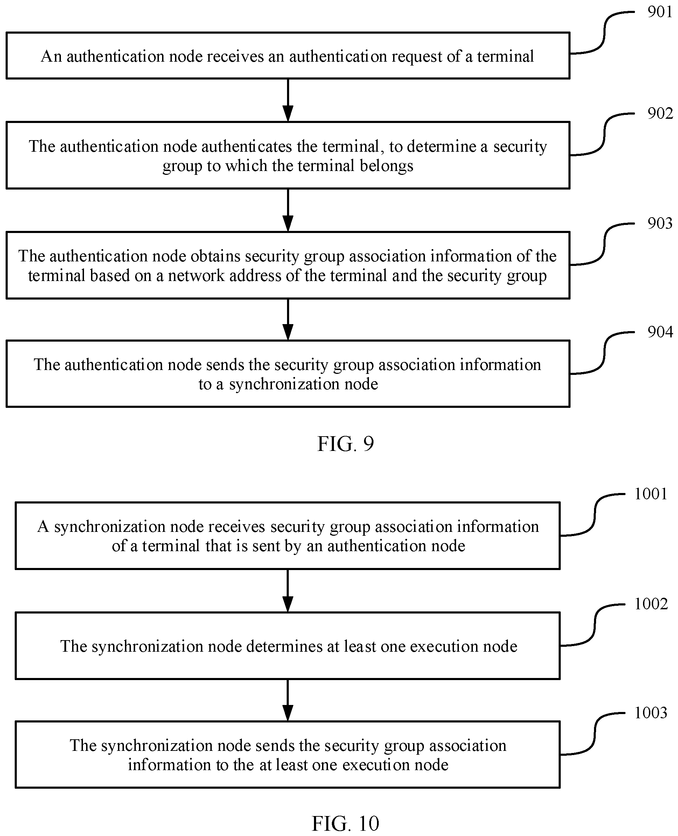

FIG. 9 is a flowchart of an authentication method according to an embodiment of this application. The method may be performed by an authentication node and includes the following steps.

901: The authentication node receives an authentication request of a terminal.

When the terminal accesses a network, the terminal may generate the authentication request. The authentication request is used to authenticate the terminal. The terminal may send the authentication request to the authentication node, and the authentication node may receive the authentication request of the terminal, to authenticate the terminal based on the authentication request.

902: The authentication node authenticates the terminal, to determine a security group to which the terminal belongs.

For a process of determining the security group, optionally, the authentication node may obtain, from a correspondence between authentication information and a security group and based on authentication information of the terminal, the security group to which the terminal belongs.

The authentication information of the terminal may include at least one of user information, location information, and other information. The authentication information of the terminal may be carried in the authentication request, and the authentication node may parse the authentication request to obtain the authentication information carried in the authentication request. Certainly, the authentication node may also obtain the authentication information of the terminal in another manner. For example, the authentication node may receive authentication information of the terminal that is delivered by a core network element, or query the authentication information of the terminal from a storage device. A manner of obtaining the authentication information is not limited in this embodiment.

For example, the user information may include at least one of a department to which the user belongs, a role of the user, and a user identity. The location information may be a current location of the terminal. For example, the location information may include at least one of an access device group of the terminal, a range of a current network address of the terminal, and a service set identifier (Service Set Identifier, SSID for short) of the terminal. The other information may be any information, used for authentication, other than the user information and the location information. For example, the other information may include a time period to which a current time point belongs, a terminal device group to which the terminal belongs, a customized condition, and the like. For a manner of obtaining the authentication information, optionally, the authentication node may parse the authentication request of the terminal, and obtain the authentication information of the terminal from the authentication request. Certainly, the authentication information of the terminal may also be obtained in another manner. The manner of obtaining the authentication information of the terminal is not limited in this embodiment.

The correspondence between authentication information and a security group may include at least one piece of authentication information and at least one corresponding security group. For a manner of obtaining the correspondence between authentication information and a security group, optionally, the authentication node may receive a configuration instruction, and obtain the correspondence between authentication information and a security group from the configuration instruction. The configuration instruction may be triggered by using a configuration operation, and the configuration instruction may carry the correspondence between authentication information and a security group.

It should be noted that, in a program, the security group obtained by the authentication node may be represented by using a group identifier of the security group, and the group identifier is used to identify a corresponding security group, and may be represented by using a number, a letter, a character string, or any other data form. Optionally, the group identifier may be recorded as "Group id" (group identifier).

903: The authentication node obtains security group association information of the terminal based on a network address of the terminal and the security group.

The network address of the terminal may be an internet protocol (Internet Protocol, IP for short) address of the terminal. For a manner of obtaining the network address, optionally, the authentication node may obtain the network address of the terminal from the authentication request or another request of the terminal. In addition, if authentication nodes are classified into an authentication point device and an authorization device, the authentication point device may send the network address of the terminal to the authorization device. For example, the authentication point device may send the network address of the terminal to the authorization device in an authentication process. For another example, after authentication on the terminal succeeds, the authentication point device may obtain the network address of the terminal and send the network address of the terminal to the authorization device.

The security group association information is used to indicate a mapping relationship between the network address of the terminal and the security group to which the terminal belongs. In a possible implementation, the security group association information may include the network address of the terminal and the group identifier of the security group. Optionally, a data form of the security group association information may be an entry. For example, the security group association information may be shown in Table 1 below. In Table 1, the network address of the terminal is "128.107.162.22", and the identifier of the security group is "100". Certainly, the entry is merely an example of the data form of the security group association information. A specific data form of the security group association information is not limited in this embodiment.

**Table 1**

| | |
|---|---|
| 128.107.162.22 | 100 |

Optionally, for a manner of obtaining the security group association information, the network address of the terminal and the group identifier of the security group may be encapsulated to obtain the security group association information. For example, the authentication node may generate a blank entry, and write the network address of the terminal and the group identifier of the security group to the blank entry, so that an entry that carries the network address of the terminal and the group identifier of the security group may be used as the security group association information. Certainly, this manner of obtaining the security group association information is merely an example for description. The manner of obtaining the security group association information is not limited in this embodiment.

Optionally, if authentication nodes are classified into an authentication point device and an authorization device, the authorization device may obtain the security group association information of the terminal based on the network address of the terminal and the security group. Optionally, after obtaining the security group association information, the authorization device may send the security group association information to the authentication point device.

904: The authentication node sends the security group association information to a synchronization node.

Optionally, before sending the security group association information to the synchronization node, the authentication node may establish a first network connection to the synchronization node, and may send the security group association information to the synchronization node by using the first network connection. The first network connection is a network connection between the authentication node and the synchronization node.

Optionally, the first network connection is at least one of an encrypted channel, a long connection, and connection multiplexing.

If the first network connection is an encrypted channel, when any piece of information is transmitted between the authentication node and the synchronization node by using the encrypted channel, the authentication node and the synchronization node may encrypt the transmitted information by using an encryption algorithm, to improve information transmission security. The encryption algorithm may include a symmetric encryption algorithm, an asymmetric encryption algorithm, and the like. Optionally, in a process of establishing the first network connection, the authentication node and the synchronization node may perform bidirectional certificate authentication. To be specific, the authentication node may authenticate a digital certificate of the synchronization node, and the synchronization node may authenticate a digital certificate of the authentication node. The digital certificate is used to verify authenticity of a public key, and the digital certificate is a file that includes the public key and information about an owner of the public key. The digital certificate may be generated by a certificate authority (English: Certificate Authority, CA for short) center or a self-defined trusted institution in an enterprise system.

If the first network connection is a long connection, the authentication node and the synchronization node may continuously send the security group association information for a plurality of times by using the first network connection, thereby reducing performance overheads in a case of a plurality of connections.

If the first network connection is connection multiplexing, a plurality of requests and/or responses transmitted between the authentication node and the synchronization node may multiplex one connection, thereby reducing a quantity of connection times and improving information transmission efficiency.

Optionally, the first network connection may be a network connection established based on a hypertext transfer protocol 2.0 (English: HyperText Transfer Protocol, HTTP 2.0 for short). Certainly, the network connection established based on the HTTP 2.0 protocol is merely an example for describing the first network connection. The authentication node and the synchronization node may establish the network connection by using any network communication protocol. For example, the authentication node and the synchronization node may establish the network connection by using an application layer protocol. The application layer protocol includes but is not limited to a network configuration (English: netcof) protocol, a real-time messaging protocol (English: Real Time Messaging Protocol, RTMP for short), and the like. The network communication protocol between the authentication node and the synchronization node is not limited in this embodiment.

Optionally, for a process of establishing the first network connection, the authentication node may be a client of the first network connection, and the synchronization node may be a server of the first network connection. The authentication node may generate a first network connection request, and send the first network connection request to the synchronization node, and the first network connection request is used to request to establish the first network connection between the authentication node and the synchronization node. When receiving the first network connection request, the synchronization node may send a first network connection response to the authentication node, and the first network connection response is used to confirm to establish the first network connection. The authentication node may receive the first network connection response of the synchronization node. Certainly, a manner in which the authentication node is the client of the first network connection and the synchronization node is the server of the first network connection is merely an example for description. Alternatively, the authentication node may be the server of the first network connection, and the synchronization node is the client of the first network connection. The process of establishing the first network connection is not limited in this embodiment.

An effect achieved in a process of establishing the first network connection in the foregoing manner may include at least the following: The first network connection may be a bidirectional connection, to be specific, when data is transmitted between any authentication node and the synchronization node, similar to a mode of a client and a server, only one network connection needs to be configured for the authentication node and the synchronization node, thereby greatly reducing workload of a configuration operation and reducing subsequent operation and maintenance workload caused by maintenance of the network connection. In particular, in a scenario in which there are a relatively large quantity of authentication nodes, a connection also needs to be configured only between the authentication node and the synchronization node. Therefore, a full-mesh (English: full-mesh) connection configuration is not formed, thereby reducing deployment and maintenance workload.

Optionally, the authentication node may encode the security group association information in a structured data format. For example, the structured data format may be a protocol buffer (English: protocol buffer) format. Correspondingly, this step may include: sending the encoded security group association information to the synchronization node, in other words, sending structured security group association information to the synchronization node. For example, the authentication node may send security group association information in the protocol buffer format to the synchronization node. The security group association information is encoded based on the structured data format, so that a transmission process of the security group association information can be made more convenient and efficient, thereby improving transmission efficiency of the security group association information.

Optionally, the authentication node may compress the security group association information. Specifically, the security group association information may be compressed by using any compression algorithm. For example, the compression algorithm may include a zip (English: Zip) compression algorithm. Correspondingly, this step may include: sending the compressed security group association information to the synchronization node. For example, the authentication node may send security group association information in a zip format to the synchronization node. The security group association information is compressed, so that a data amount of the security group association information can be reduced, thereby improving a transmission speed of the security group association information.

Optionally, the authentication node may send the security group association information of the terminal to the synchronization node in real time. Specifically, each time the authentication node obtains security group association information of any terminal, the authentication node may send the security group association information of the terminal to the synchronization node, so that a security group policy of the terminal takes effect as soon as possible.

Optionally, the security group association information of the terminal may be updated. Correspondingly, the authentication node may send the updated security group association information of the terminal to the synchronization node. Specifically, a case of updating the security group association information may include at least one of the following cases (1) to (3).

Case (1): The network address of the terminal is updated. Correspondingly, the method provided in this embodiment may further include the following steps (1.1) to (1.3).

Step (1.1): The authentication node obtains the updated network address of the terminal.

Optionally, when the network address of the terminal is updated, the terminal may send the updated network address to the authentication node, and the authentication node may receive the updated network address of the terminal, to obtain the updated network address. Specifically, when the network address of the terminal is updated, the terminal may send the updated network address to the authentication point device, and the authentication point device may receive the updated network address of the terminal, and send the updated network address to the authorization device. The authentication point device may generate a network address update request based on the updated network address of the terminal, and the network address update request carries the updated network address. The authorization device may receive the network address update request, and parse the network address update request to obtain the updated network address.

Step (1.2): The authentication node obtains the updated security group association information of the terminal based on the updated network address and the security group.

The updated security group association information is used to indicate a mapping relationship between the updated network address and the security group to which the terminal belongs. For example, the updated security group association information may include the updated network address of the terminal and the group identifier of the security group.

Step (1.3): The authentication node sends the updated security group association information to the synchronization node.

An effect achieved by using the foregoing steps (1.1) to (1.3) may include at least the following: If a current location of the terminal changes, the network address of the terminal may be updated, and the authentication node can update the security group association information as the current location of the terminal is updated, and report the updated security group association information to the synchronization node. In this way, the synchronization node can obtain the updated security group association information of the terminal, thereby ensuring accuracy of security group association information of the terminal that is stored by the synchronization node.

Case (2): The security group to which the terminal belongs is updated. Correspondingly, the method provided in this embodiment may further include the following steps (2.1) to (2.3).

Step (2.1): The authentication node obtains the updated security group of the terminal.

Specifically, the authentication node may obtain updated authentication information of the terminal, and obtain, from a correspondence between authentication information and a security group and based on the updated authentication information of the terminal, the updated security group to which the terminal belongs.

The updated authentication information may include updated location information, updated other information, updated user information, and the like. The updated location information is used to indicate an updated location of the terminal. The updated other information may include an updated time period and an updated terminal group. The updated user information may include an updated department, an updated role, an updated account, and the like.

Optionally, a manner of obtaining the updated security group may include either of or a combination of the following manners 1 and 2.

Manner 1: The authentication node may obtain the updated location information of the terminal, and obtain, from a correspondence between location information and a security group and based on the updated location information, the updated security group to which the terminal belongs.

Optionally, the correspondence between location information and a security group may include at least one piece of location information and an identifier of at least one security group. The correspondence between location information and a security group may be preconfigured on the authentication node, for example, preconfigured on a 3A server. For example, the correspondence between location information and a security group may be shown in Table 2 below:

**Table 2**

| Location information | Security group |
|---|---|
| Office area | A1 |
| Visitor area | A2 |
| Dining hall | A3 |
| Dormitory | A4 |
| Meeting room | A5 |

In an example scenario, during a period in which the terminal accesses the network, assuming that a specific terminal is currently in the office area, the authentication node learns, from the correspondence between location information and a security group shown in Table 1, that a security group to which the terminal belongs is A1. After the terminal moves from the office area to the visitor area, the authentication node may learn, from the correspondence between location information and a security group shown in Table 1, that an updated security group to which the terminal belongs is A2.

Manner 2: The authentication node may obtain the updated time period, and obtain, from a correspondence between a time period and a security group and based on the updated time period, the updated security group to which the terminal belongs.

Optionally, the correspondence between a time period and a security group may include at least one time period and an identifier of at least one security group. The correspondence between a time period and a security group may be preconfigured on the authentication node, for example, preconfigured on a 3A server. For example, the correspondence between a time period and a security group may be shown in Table 3 below:

**Table 3**

| Time period | Security group |
|---|---|
| 07:00 to 09:00 | A1 |
| 09:00 to 11:30 | A2 |
| 11:30 to 14:00 | A3 |
| 14:00 to 18:00 | A4 |
| 18:00 to 21:00 | A5 |

In an example scenario, during a period in which the terminal accesses the network, assuming that a specific terminal accesses the network at 10:00, the authentication node learns, from the correspondence between a time period and a security group shown in Table 3, that a security group to which the terminal belongs is A2. After current time reaches 11:30, the authentication node may learn, from the correspondence between a time period and a security group shown in Table 3, that an updated security group to which the terminal belongs is A3.

Step (2.2): The authentication node obtains the updated security group association information of the terminal based on the network address of the terminal and the updated security group to which the terminal belongs.

The updated security group association information is used to indicate a mapping relationship between the network address of the terminal and the updated security group to which the terminal belongs. For example, the updated security group association information may include the network address of the terminal and a group identifier of the updated security group.

Step (2.3): The authentication node sends the updated security group association information of the terminal to the synchronization node.

An effect achieved by using the foregoing steps (2.1) to (2.3) may include at least the following: If the authentication information of the terminal changes, the security group to which the terminal belongs may be updated, and the authentication node can update the security group association information as the security group to which the terminal belongs is updated, and report the updated security group association information to the synchronization node, so that the synchronization node can obtain the updated security group association information of the terminal, thereby ensuring accuracy of security group association information of the terminal that is stored by the synchronization node.

Optionally, after obtaining the updated security group to which the terminal belongs, the authorization device may send the updated security group to which the terminal belongs to the authentication point device. The authorization device may write, to any packet, the updated security group to which the terminal belongs, and send, to the authentication point device, the packet that carries the updated security group. For example, the packet may be a change-of-authorization (English: Change-of-Authorization, CoA for short) packet in the radius protocol.

Case (3): Both the network address of the terminal and the security group to which the terminal belongs are updated. Correspondingly, the method provided in this embodiment may further include the following steps (3.1) to (3.3).

Step (3.1): The authentication node obtains the updated network address of the terminal and the updated security group to which the terminal belongs.

Step (3.1) is similar to step (1.1) and step (2.1), and details are not described herein.

Step (3.2): The authentication node obtains the updated security group association information of the terminal based on the updated network address of the terminal and the updated security group to which the terminal belongs.

Step (3.2) is similar to step (1.2) and step (2.2), and details are not described herein.

The updated security group association information is used to indicate a mapping relationship between the updated network address of the terminal and the updated security group to which the terminal belongs. For example, the updated security group association information may include the updated network address of the terminal and a group identifier of the updated security group.

Step (3.3): The authentication node sends the updated security group association information to the synchronization node.

Step (3.3) is similar to step (1.3), and details are not described herein.

In the method provided in this embodiment, the authentication node obtains the security group association information of the terminal based on the network address of the terminal and the security group, and sends the security group association information to the synchronization node, so that the synchronization node can synchronize the security group association information of the terminal to the execution node, and the execution node can obtain the security group association information of the terminal. In this way, the execution node can perceive, based on the security group association information, the security group to which the terminal belongs, so that a packet of the terminal can be processed based on a security group policy, thereby implementing separation between the authentication node and the execution node, breaking a constraint on networking, expanding an application range, and improving compatibility.

FIG. 10 is a flowchart of an information synchronization method according to an embodiment of this application. As shown in FIG. 10, the method may be performed by a synchronization node and includes the following steps.

1001: The synchronization node receives security group association information of a terminal that is sent by an authentication node.

Optionally, after receiving the security group association information of the terminal, the synchronization node may store the security group association information of the terminal. In a possible implementation, the synchronization node may include a memory, and the security group association information of the terminal may be written to the memory, so that the memory stores the security group association information of the terminal. The memory may include an internal memory and an external memory. The internal memory may be a dynamic random access memory (English: dynamic random access memory, DRAM for short). The external memory may include a hard disk, a magnetic disk, and a compact disc. For example, the memory may be a flash memory or an NVMe solid state drive (English: solid state drives, SSD for short). In another possible implementation, the synchronization node may send the security group association information to a storage node, the storage node may receive the security group association information and store the security group association information, and the synchronization node may subsequently query the security group association information from the storage node. The storage node may include a local storage device and a network storage device, and the network storage device may be a cloud storage system.

Optionally, before receiving the security group association information of the terminal that is sent by the authentication node, the synchronization node may establish a first network connection to the synchronization node, and the synchronization node may receive, by using the first network connection, the security group association information of the terminal that is sent by the authentication node. For a process of establishing the first network connection, refer to the foregoing embodiment of FIG. 9. Details are not described herein.

Optionally, if the security group association information is encoded, the synchronization node may receive the encoded security group association information, and decode the encoded security group association information to obtain the security group association information. For example, the synchronization node may receive security group information in a protocol buffer format, and parse the security group information in the protocol buffer format to obtain the security group association information.

Optionally, if the security group association information is compressed, the synchronization node may receive the compressed security group association information, and decompress the compressed security group association information to obtain the security group association information. For example, the synchronization node may receive security group information in a zip format, and decompress the security group information in the zip format to obtain the security group association information.

1002: The synchronization node determines at least one execution node.

The at least one execution node determined by the synchronization node includes at least a target execution node. Specifically, the at least one execution node may include only the target execution node, or may include not only the target execution node, but also an execution node other than the target execution node. The target execution node is an execution node configured to process, based on a security group policy, a packet of the terminal mentioned in step 1001. To be specific, after obtaining the security group association information of the terminal, the synchronization node may at least determine the target execution node at which the packet of the terminal subsequently arrives, and synchronize the security group association information of the terminal to the target execution node. Certainly, a case in which another execution node is further determined is not excluded. This is not limited in this embodiment.

Optionally, the synchronization node may pre-store a network address of the at least one execution node, and that the synchronization node determines at least one execution node may include: The synchronization node reads the stored network address of the at least one execution node. For a manner in which the synchronization node stores the network address of the execution node, in a possible implementation, the synchronization node may send a network address request to the execution node, the execution node may receive the network address request and send a network address of a local end to the synchronization node, and the synchronization node may receive the network address of the execution node and store the network address of the execution node. In this way, the synchronization node can actively discover a network address of each execution node that accesses a network. In another possible implementation, when any execution node accesses the network, the execution node may send a network address of a local end to the synchronization node, and the synchronization node may receive the network address of the execution node and store the network address of the execution node. Certainly, these two implementations are merely examples for description, and the network address of the execution node may also be stored in another manner. For example, an administrator may trigger a configuration operation on the synchronization node. Correspondingly, the synchronization node may receive a configuration instruction and obtain the network address of the execution node from the configuration instruction. The manner in which the synchronization node stores the network address of the execution node is not limited in this embodiment.

Optionally, the synchronization node may pre-store an identifier of the at least one execution node, and that the synchronization node determines at least one execution node may include: The synchronization node reads the stored identifier of the at least one execution node. A manner in which the synchronization node stores the identifier of the execution node is the same as that in the previous paragraph, and details are not described herein.

Optionally, a process in which the synchronization node determines the at least one execution node may include the following implementations 1 and 2.

Implementation 1: The synchronization node determines the target execution node.

Specifically, the synchronization node may determine, from a correspondence between a network segment and an execution node and based on a target network segment to which a network address of the terminal belongs, a target execution node corresponding to the target network segment.

The target network segment is a network segment to which the network address of the terminal belongs. The synchronization node may obtain the target network segment based on the network address of the terminal.

The correspondence between a network segment and an execution node may include at least one network segment and an identifier of the at least one execution node. Any execution node in the correspondence between a network segment and an execution node may correspond to one or more network segments. The identifier of the execution node is used to identify the corresponding execution node. For example, the identifier of the execution node may be an identification (identification, ID for short), a number, a name, a sequence number, or the like of the execution node. For example, the correspondence between a network segment and an execution node may be shown in Table 4 below.

**Table 4**

| Execution node | Network segment |
|---|---|
| Execution node 1 | 202.178.100.0/24 |
| Execution node 2 | 202.178.200.0/24 |
| Execution node 3 | 202.178.300.0/24 |

Optionally, for a manner of obtaining the correspondence between a network segment and an execution node, the synchronization node may receive a configuration instruction, and the configuration instruction is used to indicate the correspondence between a network segment and an execution node. The synchronization node may parse the configuration instruction to obtain the correspondence between a network segment and an execution node. The configuration instruction may be triggered by the configuration operation of the administrator. The synchronization node can support a security group subscription configuration function to meet a customization requirement of a user.

Implementation 2: The synchronization node determines each execution node in the network.

Optionally, that the synchronization node determines each execution node in the network may include: The synchronization node determines a network address of each execution node in the network. For example, the synchronization node may pre-store the network address of each execution node in the network, and the synchronization node may read the stored network address of each execution node.

Optionally, that the synchronization node determines each execution node in the network may include: The synchronization node determines each execution node in the network. For example, the synchronization node may read a stored identifier of each execution node in the network. For example, the synchronization node may pre-store the identifier of each execution node in the network, and may read the stored identifier of each execution node.

In the implementation 2, because each execution node in the network includes the target execution node at which the packet of the terminal subsequently arrives, an effect of pushing the security group association information to the target execution node in the network can be achieved by pushing the security group association information to each execution node in the network, thereby ensuring that the target execution node can obtain the security group association information.

Optionally, the synchronization node may encode the security group association information in a structured data format. For example, the structured data format may be a protocol buffer format.

Optionally, the synchronization node may compress the security group association information. Specifically, the security group association information may be compressed by using any compression algorithm. For example, the compression algorithm may include a zip (zip) compression algorithm

1003: The synchronization node sends the security group association information to the at least one execution node.

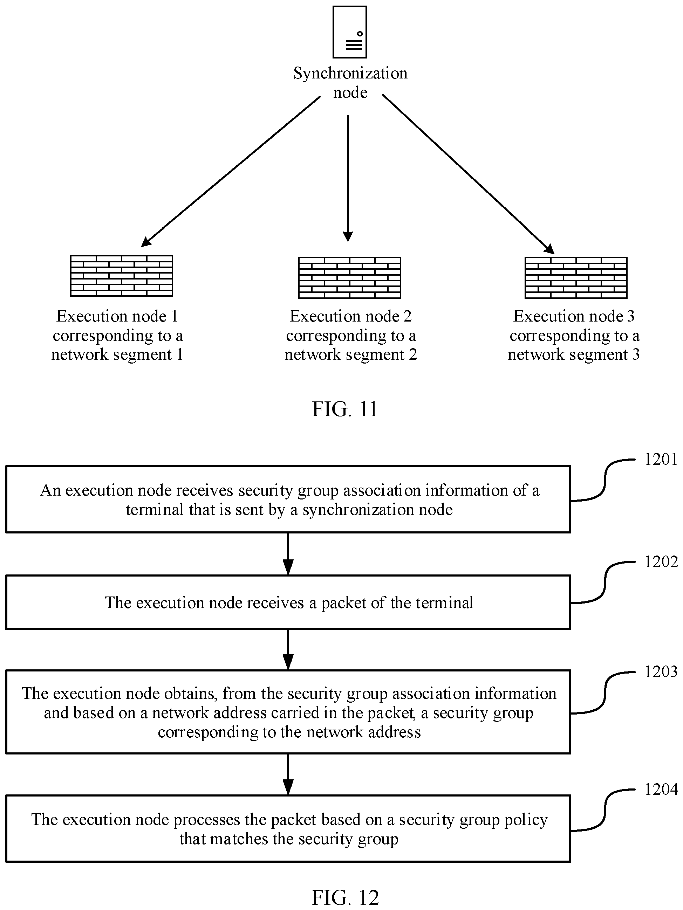

With reference to the implementation 1, the synchronization node may send the security group association information of the terminal to the target execution node corresponding to the target network segment. Further, optionally, the synchronization node may receive security group association information of a plurality of terminals, and send security group association information of terminals on different network segments to different target execution nodes based on the correspondence between a network segment and an execution node. For example, as shown in FIG. 11, it is assumed that a network segment 1 corresponds to an execution node 1, a network segment 2 corresponds to an execution node 2, and a network segment 3 corresponds to an execution node 3. The synchronization node may send security group association information of all terminals whose network addresses belong to the network segment 1 to the execution node 1, send security group association information of all terminals whose network addresses belong to the network segment 2 to the execution node 2, send security group association information of all terminals whose network addresses belong to the network segment 3 to the execution node 3, and so on.

An effect achieved by using the implementation 1 may include at least the following: When receiving security group information of the terminals on the different network segments, the synchronization node may send each piece of security group information to an execution node on a corresponding network segment, so that a function that each execution node receives security group information of a terminal on a network segment of a local end can be implemented, thereby achieving a refined pushing effect, and avoiding running resource consumption caused when the execution node frequently receives the security group information. In addition, storage resources of the execution node can be saved, and a data amount of security group association information to be stored by a single execution node is prevented from being excessively large. In particular, in a scenario in which a quantity of terminals accessing the network is extremely large, a data amount of security group information to be synchronized by the synchronization node is extremely large, and running efficiency of an entire system can be improved when the security group information is sent in a refined manner.

With reference to the implementation 2, the synchronization node may send the security group association information of the terminal to each execution node in the network. Further, optionally, each time the synchronization node receives security group association information of any terminal, the synchronization node may send the security group association information of the terminal to each execution node in the network.

Optionally, before sending the security group association information to the at least one execution node, the synchronization node may establish a second network connection to the at least one execution node, and may send the security group association information to the at least one execution node by using the second network connection. The second network connection is a network connection between the synchronization node and the at least one execution node. The second network connection response is used to confirm to establish the second network connection.

Optionally, the second network connection is at least one of an encrypted channel, a long connection, and connection multiplexing.

If the second network connection is an encrypted channel, when any piece of information is transmitted between the authentication node and the at least one execution node by using the encrypted channel, the authentication node and the at least one execution node may encrypt the transmitted information by using an encryption algorithm, to improve information transmission security. The encryption algorithm may include a symmetric encryption algorithm, an asymmetric encryption algorithm, and the like. Optionally, in a process of establishing the second network connection, the authentication node and the at least one execution node may perform bidirectional certificate authentication. To be specific, the authentication node may authenticate a digital certificate of the at least one execution node, and the at least one execution node may authenticate a digital certificate of the authentication node.

If the second network connection is a long connection, the authentication node and the at least one execution node may continuously send the security group association information for a plurality of times by using the second network connection, thereby reducing performance overheads in a case of a plurality of connections.

If the second network connection is connection multiplexing, a plurality of requests and/or responses transmitted between the authentication node and the at least one execution node may multiplex one connection, thereby reducing a quantity of connection times and improving information transmission efficiency.

Optionally, the second network connection may be a network connection established based on an HTTP 2.0 protocol. Certainly, the network connection established based on the HTTP 2.0 protocol is merely an example for describing the second network connection. The synchronization node and the at least one execution node may establish a network connection by using any network communication protocol, for example, establish the network connection by using an application layer protocol. The application layer protocol includes but is not limited to a netcof protocol, an RTMP protocol, and the like. The network communication protocol between the synchronization node and the at least one execution node is not limited in this embodiment.

Optionally, for a process of establishing the second network connection, the synchronization node may be a client of the second network connection, and the at least one execution node may be a server of the second network connection. The synchronization node may generate a second network connection request, and send the second network connection request to the at least one execution node, and the second network connection request is used to request to establish the second network connection between the synchronization node and the at least one execution node. When receiving the second network connection request, the synchronization node may send a second network connection response to the at least one execution node, and the second network connection response is used to confirm to establish the second network connection. The synchronization node may receive the second network connection response of the at least one execution node. Certainly, a manner in which the synchronization node is the client of the second network connection and the at least one execution node is the server of the second network connection is merely an example for description. Alternatively, the synchronization node may be the server of the second network connection, and the at least one execution node is the client of the second network connection. The process of establishing the second network connection is not limited in this embodiment.

An effect achieved when the second network connection is established in the foregoing manner may include at least the following: The second network connection may be a bidirectional connection, to be specific, when data is transmitted between the synchronization node and any execution node, similar to a mode of a client and a server, only one network connection needs to be configured for the synchronization node and the authentication node, thereby greatly reducing workload of a configuration operation and reducing subsequent operation and maintenance workload caused by maintenance of the network connection. In particular, in a scenario in which there are a relatively large quantity of execution nodes, a connection also needs to be configured only between the execution node and the synchronization node. Therefore, a full-mesh (English: full-mesh) connection configuration is not formed, thereby reducing deployment and maintenance workload.

Optionally, if the synchronization node encodes the security group association information based on the structured data format in step 1003, this step may include: sending the encoded security group association information to the synchronization node, in other words, sending structured security group association information to the at least one execution node. For example, the synchronization node may send security group association information in the protocol buffer format to the at least one execution node.

Optionally, if the synchronization node compresses the security group association information in step 1003, this step may include: sending the compressed security group association information to the at least one execution node. For example, the synchronization node may send security group association information in the zip format to the at least one execution node.

Optionally, if the network address of the terminal and/or the security group are/is updated, the security group association information of the terminal may be updated. Correspondingly, the method provided in this embodiment may further include the following steps 1 to 3.

Step 1: The synchronization node receives the updated security group association information of the terminal that is sent by the authentication node, where the updated security group association information is used to indicate a mapping relationship between the updated network address of the terminal and the security group, or the updated security group association information is used to indicate a mapping relationship between the network address of the terminal and the updated security group to which the terminal belongs, or the updated security group association information is used to indicate a mapping relationship between the updated network address of the terminal and the updated security group to which the terminal belongs.

Optionally, the synchronization node may update the stored security group association information of the terminal to the updated security group association information, to ensure precision of the stored security group association information of the terminal.

Step 2: The synchronization node determines at least one execution node.

Step 3: The synchronization node sends the updated security group association information to the at least one execution node.

An effect achieved by using the foregoing steps 1 to 3 may include at least the following: If a current location of the terminal changes, the network address of the terminal may be updated, and the synchronization node can deliver the updated security group association information to the execution node as the network address of the terminal is updated. In this way, the execution node can obtain the updated security group association information of the terminal, thereby ensuring accuracy of security group association information of the terminal that is stored by the execution node.

In the method provided in this embodiment, the synchronization node synchronizes the security group association information from the authentication node to the execution node, so that the execution node can obtain the security group association information of the terminal, and the execution node can perceive, based on the security group association information, the security group to which the terminal belongs. In this way, the packet of the terminal can be processed based on the security group policy, thereby implementing separation between the authentication node and the execution node, breaking a constraint on networking, expanding an application range, and improving compatibility.

FIG. 12 is a flowchart of a packet processing method according to an embodiment of this application. As shown in FIG. 12, the method may be performed by an execution node and includes the following steps.

1201: The execution node receives security group association information of a terminal that is sent by a synchronization node.

Optionally, after receiving the security group association information of the terminal, the execution node may store the security group association information of the terminal. In a possible implementation, the execution node may include a memory, and the security group association information of the terminal may be written to the memory, so that the memory stores the security group association information of the terminal. In another possible implementation, the execution node may send the security group association information to a storage node, the storage node may receive the security group association information and store the security group association information, and the execution node may subsequently query the security group association information from the storage node.

Optionally, before receiving the security group association information of the terminal that is sent by the synchronization node, the execution node may establish a second network connection to the synchronization node, and may receive, by using the second network connection, the security group association information of the terminal that is sent by the synchronization node. For a process of establishing the second network connection, refer to the foregoing embodiment of FIG. 10. Details are not described herein.

Optionally, if the security group association information is encoded, the execution node may receive the encoded security group association information, and decode the encoded security group association information to obtain the security group association information. For example, the execution node may receive security group information in a structured data format, and parse the security group association information in the structured data format to obtain the security group association information. For example, the execution node may receive security group information in a protocol buffer format, and parse the security group information in the protocol buffer format to obtain the security group association information.

Optionally, if the security group association information is compressed, the execution node may receive the compressed security group association information, and decompress the compressed security group association information to obtain the security group association information. For example, the execution node may receive security group information in a zip format, and decompress the security group information in the zip format to obtain the security group association information.

1202: The execution node receives a packet of the terminal.

The packet of the terminal is used to carry service data of the terminal, and the packet may be generated by the terminal and sent to the execution node. It should be noted that data transmitted at different layers of a network may have different names. Correspondingly, the term "packet" may be replaced with another term. For example, at a transport layer, the packet may also be referred to as a data packet, a packet (packet), a datagram, or the like, and a data link layer, the packet may also be referred to as a frame or the like.

The packet of the terminal may include at least one of a packet transmitted between two different terminals and a packet transmitted between the terminal and a network resource. The packet transmitted between two different terminals may be considered as a packet generated by access behavior between the two terminals. For example, the packet may include at least one of a packet sent by one terminal to another terminal and a packet received by one terminal from another terminal. The packet transmitted between the terminal and the network resource may be considered as a packet generated by access behavior between the terminal and the network resource. For example, the packet may include at least one of a packet sent by a terminal to the network resource and a packet received by a terminal from the network resource.

Optionally, that the execution node receives a packet of the terminal may include: The execution node receives traffic of the terminal. The traffic is also referred to as a data flow or a packet flow, and is a plurality of consecutive packets. A quintuple of same traffic may be the same. Optionally, the packet between the execution node and the terminal may be forwarded by using an authentication node. Correspondingly, that the execution node receives a packet of the terminal may include: The authentication node receives the packet of the terminal, the authentication node sends the packet of the terminal to the execution node, and the execution node receives the packet of the terminal that is sent by the authentication node.

1203: The execution node obtains, from the security group association information and based on a network address carried in the packet, a security group corresponding to the network address.

The execution node may parse the packet to obtain the network address carried in the packet, and query the security group association information based on the network address, to obtain the security group that corresponds to the network address and that is in the security group association information. For example, it is assumed that the security group association information is shown in Table 1 above. If the execution node receives a packet that carries a network address "128.107.162.22", the execution node may learn, from the security group association information, that a security group corresponding to the network address is a security group 100.

The network address carried in the packet may include a source network address and a destination network address. Correspondingly, step 1203 may include either of or a combination of the following (1) and (2). To distinguish between descriptions, security group association information corresponding to the source network address is referred to as first security group association information, security group association information corresponding to the destination network address is referred to as second security group association information, a security group corresponding to the source network address is referred to as a first security group, and a security group corresponding to the destination network address is referred to as a second security group. The terms "first security group association information" and "first security group association information" are used to distinguish between different security group association information, and should not be understood as an explicit or implicit indication of a temporal or logical relationship of the different security group association information, for example, should not be understood as an explicit or implicit indication of a sequence of generation time, reception time, and storage time or relative importance of the different security group association information. Similarly, the terms "first security group" and "second security group" are used to distinguish between different security groups, and should not be understood as an explicit or implicit indication of a temporal or logical relationship of the different security groups, for example, should not be understood as an explicit or implicit indication of a sequence of generation time, reception time, and storage time or relative importance of the different security groups.
(1): Obtain, from the first security group association information and based on the source network address carried in the packet, the first security group corresponding to the source network address.
   The source network address may be a source IP address of the packet, and the terminal may query the security group association information based on the source network address, to obtain the security group corresponding to the source network address. Because the first security group is the security group corresponding to the source network address, the first security group may be referred to as a source security group.
(2): Obtain, from the second security group association information and based on the destination network address carried in the packet, the second security group corresponding to the destination network address, where the destination network address is a network address of a second terminal.

The destination network address may be a destination IP address of the packet, and the terminal may query the security group association information based on the destination network address, to obtain the security group corresponding to the destination network address. Because the second security group is the security group corresponding to the destination network address, the second security group may be referred to as a destination security group.

A first point that should be noted is that, that (1) in step 1203 is described before (2) in step 1203 is for ease of description. In this embodiment, a time sequence of (1) and (2) in step 1203 is not limited. For example, (1) in step 1203 may be performed before (2) in step 1203. For another example, (2) in step 1203 may be performed before (1) in step 1203. For still another example, (1) in step 1203 and (2) in step 1203 may be simultaneously performed.

A second point that should be noted is that, either or both of (1) in step 1203 and (2) in step 1203 may be performed. For example, in a scenario in which two terminals access each other, security groups of both the two terminals may be determined by using the security group association information, and the execution node may perform (1) and (2). For a specific implementation of this scenario, refer to the following embodiments of FIG. 14 to FIG. 16A to FIG. 16C. In a scenario in which the terminal interacts with the network resource, a security group of the terminal may be determined by using the security group association information, a security group of the network resource may be determined by using configuration information, and the execution node may perform either of (1) and (2). For a specific implementation of this scenario, refer to the following embodiments of FIG. 17 to FIG. 19A and FIG. 19B.

1204: The execution node processes the packet based on a security group policy that matches the security group.

Optionally, the execution node may match, based on the security group to which the terminal belongs, the security group policy corresponding to the security group. For a manner of matching the security group policy, in a possible implementation, the execution node may obtain, from a correspondence between a security group and a security group policy and based on the security group to which the terminal belongs, the security group policy that matches the security group.

The correspondence between a security group and a security group policy is used to indicate a security group policy corresponding to any security group. For example, the correspondence between a security group and a security group policy may include an identifier of at least one security group and an identifier of at least one security group policy. The identifier of the security group policy is used to indicate the corresponding security group policy, and may be a name, a number, a keyword, a sequence number, or the like of the security group.

Optionally, the correspondence between a security group and a security group policy is used to indicate a security group policy corresponding to the source security group and a security group policy corresponding to the destination security group. The source security group is the security group corresponding to the source network address of the packet, and may be considered as a security group to which an access device belongs. The destination security group is the security group corresponding to the destination network address of the packet, and may be considered as a security group to which an accessed device belongs.

Optionally, the correspondence between a security group and a security group policy may be a security group policy matrix, and rows and columns of the security group policy matrix may indicate one or more security groups. For example, a row of the security group policy matrix may indicate one or more source security groups, and the row of the security group policy matrix may indicate one or more destination security groups. For example, the correspondence between a security group and a security group policy may be shown in Table 5 below:

**Table 5**

| Source security group Destination security group | Employee on the move | Outsourced employee | Administrator | Human resources employee |
|---|---|---|---|---|
| Employee on the move | | Allowed to access Low priority | | Allowed to access Maximum bandwidth |
| Outsourced employee | Prohibited from accessing | | Prohibited from accessing | Prohibited from accessing |
| Administrator | Allowed to access High priority | Allowed to access High priority | | Allowed to access High priority |
| Human resources employee | Allowed to access | Allowed to access | Allowed to access | |

Optionally, for a manner of obtaining the correspondence between a security group and a security group policy, the correspondence between a security group and a security group policy may be pre-stored on the execution node, and the execution node may read the stored correspondence between a security group and a security group policy. For example, the correspondence between a security group and a security group policy may be determined based on a configuration operation of a user. Specifically, the execution node may receive a configuration instruction, the configuration instruction is used to indicate the correspondence between a security group and a security group policy, and the configuration instruction may be triggered based on the configuration operation of the user. The execution node may obtain the correspondence between a security group and a security group policy based on the configuration instruction, and store the correspondence between a security group and a security group policy.

For a manner of matching the security group policy based on the correspondence between a security group and a security group policy, the execution node may obtain, from the correspondence between a security group and a security group policy and based on the first security group corresponding to the source network address of the packet and the second security group corresponding to the destination network address, a security group policy that matches both the first security group and the second security group. In a possible implementation, the execution node may obtain, from the correspondence between a security group and a security group policy, a security group policy in which a source security group is the first security group and a destination security group is the second security group, and the security group policy is the security group policy that matches both the first security group and the second security group.

With reference to the foregoing optional implementations, in a scenario in which the terminal interacts with any device, it is assumed that the terminal is to access another device, the terminal is a packet sending device, and the accessed device is a packet receiving device. In this case, the execution node may obtain, from the correspondence between a security group and a security group policy and based on a first security group corresponding to the network address of the terminal and a second security group corresponding to a network address of the accessed device, a security group policy in which a source security group is the first security group and a destination security group is the second security group, and the security group policy is a security group policy that matches the packet. Similarly, it is assumed that another device is to access the terminal, the terminal is a packet receiving device, and the accessed device is a packet sending device. In this case, the execution node may obtain, from the correspondence between a security group and a security group policy and based on a first security group corresponding to the network address of the terminal and a second security group corresponding to a network address of the accessed device, a security group policy in which a destination security group is the first security group and a source security group is the second security group, and the security group policy is a security group policy that matches the packet.

In an example scenario, it is assumed that the correspondence between a security group and a security group policy is shown in Table 3 above, and it is assumed that a terminal 1 of the administrator is to access a terminal 2 of the outsourced employee. In this case, the terminal 1 initiates a packet to the terminal 2, and the execution node receives the packet from the terminal 1 to the terminal 2, and may learn, based on a network address of the terminal 1, that the first security group is the administrator, and learn, based on a network address of the terminal 2, that the second security group is the outsourced employee, and therefore may learn, from Table 3, that the security group policy is "allowed to access, high priority".

For a packet processing manner, optionally, a manner of processing the packet based on the security group policy may include one or more of the following: forwarding the packet, discarding the packet, controlling transmission bandwidth of the packet, controlling a transmission rate of the packet, controlling a forwarding priority of the packet, allocating a transmission resource to the packet, and storing the packet to a specified priority queue.

For example, the manner of processing the packet based on the security group policy may include the following (1) and (2).
(1). If the security group policy that matches the security group is an access rights control policy, the execution node may forward the packet of the terminal or discard the packet of the terminal based on the access rights control policy. Specifically, if the access rights control policy is an access allowed policy, the execution node may forward the packet of the terminal based on the access allowed policy. If the access rights control policy is an access prohibited policy, the execution node may discard the packet of the terminal based on the access prohibited policy.
(2). If the security group policy that matches the security group is an experience assurance policy, the execution node may control a traffic size of the packet of the terminal based on the experience assurance policy, for example, control bandwidth of the terminal within a range that does not exceed a bandwidth threshold, to avoid network congestion, for another example, forward the packet of the terminal based on the forwarding priority.

In an example scenario, assuming that an employee a on the move is to access an outsourced employee b, in a packet sent by a terminal of the employee a on the move, a source network address is a network address of the terminal of the employee a on the move, and a destination network address is a network address of a terminal of the outsourced employee b. The execution node may learn, based on the source network address of the packet, that the first security group is the employee on the move, and the second security group is the outsourced employee, obtain, from the correspondence between a security group and a security group policy, a security group policy that matches both the employee on the move and the outsourced employee, namely, "allowed to access, high priority", and allow, based on the security group policy, the employee a on the move to access the outsourced employee b, and preferentially forward a packet transmitted between the terminal of the employee a on the move and the terminal of the outsourced employee b.

Optionally, if the network address of the terminal and/or the security group are/is updated, the security group association information of the terminal may be updated. Correspondingly, the method provided in this embodiment may further include the following steps 1 to 4.
Step 1: The execution node receives the updated security group association information of the terminal that is sent by the synchronization node, where the updated security group association information is used to indicate a mapping relationship between the updated network address of the terminal and the security group, or the updated security group association information is used to indicate a mapping relationship between the network address of the terminal and the updated security group to which the terminal belongs, or the updated security group association information is used to indicate a mapping relationship between the updated network address of the terminal and the updated security group to which the terminal belongs.
   Optionally, the execution node may update the stored security group association information of the terminal to the updated security group association information, to ensure precision of the stored security group association information of the terminal.
Step 2: The execution node receives the packet of the terminal.
Step 3: The execution node obtains, from the updated security group association information and based on the network address carried in the packet, a security group corresponding to the network address.
Step 4: The execution node processes the packet based on the security group policy that matches the security group.

An effect achieved by using the foregoing steps 1 to 4 may include at least the following: If a current location of the terminal changes, the network address of the terminal and/or the security group may be updated, and the execution node can update the stored security group association information of the terminal as the network address and/or the security group are/is updated, to ensure accuracy of the security group association information of the terminal that is stored by the execution node.

In the method provided in this embodiment, the execution node may obtain the security group association information of the terminal by using the security group association information delivered by the synchronization node, and therefore can perceive the security group to which the terminal belongs; and when traffic of the terminal arrives at the execution node, the execution node may process the packet of the terminal based on the security group policy, thereby implementing separation between the authentication node and the execution node, breaking a constraint on networking, expanding an application range, and improving compatibility.

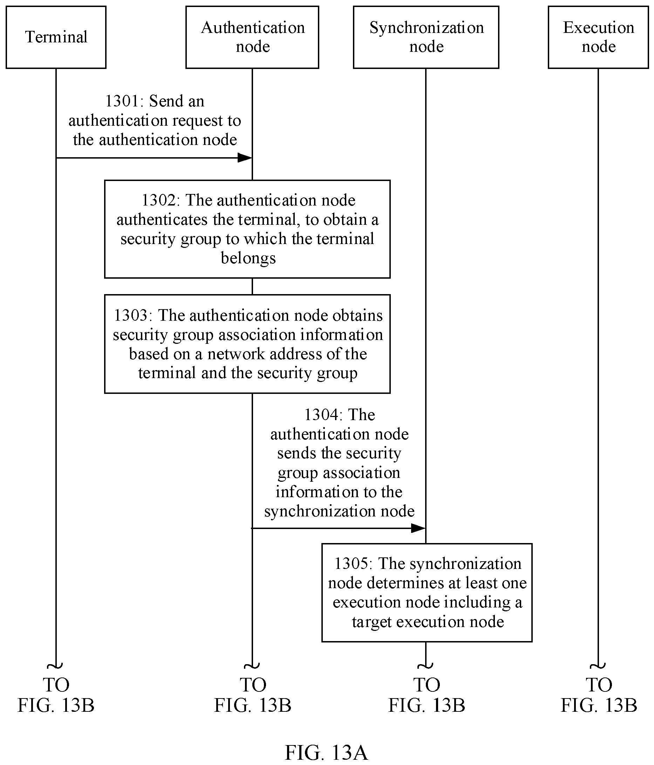

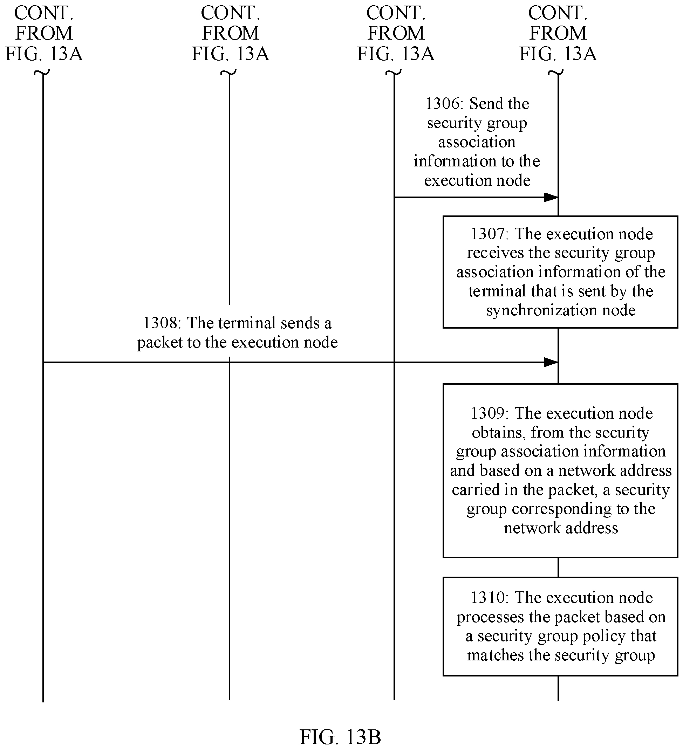

FIG. 13A and FIG. 13B are a flowchart of a service processing method according to an embodiment of this application. As shown in FIG. 13A and FIG. 13B, interaction bodies of the method include a terminal, an authentication node, a synchronization node, and an execution node, and the method includes the following steps.

1301: The terminal sends an authentication request to the authentication node.

1302: When the authentication node receives the authentication request of the terminal, the authentication node authenticates the terminal, to obtain a security group to which the terminal belongs.

Step 1302 may be similar to step 901 and step 902 in the foregoing embodiment of FIG. 9, and details are not described herein.

1303: The authentication node obtains security group association information of the terminal based on a network address of the terminal and the security group.

Step 1303 may be similar to step 903 in the foregoing embodiment of FIG. 9, and details are not described herein.

1304: The authentication node sends the security group association information to the synchronization node.

Step 1304 may be similar to step 904 in the foregoing embodiment of FIG. 9, and details are not described herein.

1305: When the synchronization node receives the security group association information of the terminal that is sent by the authentication node, the synchronization node determines at least one execution node including a target execution node, where the target execution node is configured to process a packet of the terminal based on a security group policy.

Step 1305 may be similar to step 1001 and step 1002 in the foregoing embodiment of FIG. 10, and details are not described herein.

1306: The synchronization node sends the security group association information to the at least one execution node.

Step 1306 may be similar to step 1003 in the foregoing embodiment of FIG. 10, and details are not described herein.

1307: The execution node receives the security group association information of the terminal that is sent by the synchronization node.

Step 1307 may be similar to step 1201 in the foregoing embodiment of FIG. 12, and details are not described herein.

1308: The terminal sends the packet to the execution node.

1309: When the execution node receives the packet of the terminal, the execution node obtains, from the security group association information and based on a network address carried in the packet, a security group corresponding to the network address.

Step 1309 may be similar to step 1202 and step 1203 in the foregoing embodiment of FIG. 12, and details are not described herein.

1310: The execution node processes the packet based on a security group policy that matches the security group.

Step 1310 may be similar to step 1204 in the foregoing embodiment of FIG. 12, and details are not described herein.

Optionally, the method provided in this embodiment of this application may be applied to a scenario in which terminals that perform access across authentication nodes access each other. Specific implementation may be shown in the following embodiments of FIG. 14 to FIG. 16A to FIG. 16C.

To distinguish between descriptions, in the embodiments of FIG. 14 to FIG. 16A to FIG. 16C, any two different authentication nodes are separately referred to as a first authentication node and a second authentication node, a terminal authenticated by the first authentication node is referred to as a first terminal, a terminal authenticated by the second authentication node is referred to as a second terminal, a security group to which the first terminal belongs is referred to as a first security group, a security group to which the second terminal belongs is referred to as a second security group, and an execution node that receives a packet transmitted between the first terminal and the second terminal is referred to as a first target execution node.

FIG. 14 is a flowchart of an information synchronization method according to an embodiment of this application. As shown in FIG. 14, the method may be performed by a synchronization node and includes the following steps.

1401: The synchronization node receives first security group association information of a first terminal that is sent by a first authentication node.

The first security group association information is used to indicate a mapping relationship between a network address of the first terminal and a first security group to which the first terminal belongs. For example, the first security group association information may include the network address of the first terminal and a group identifier of the first security group. The first security group association information may be generated in a process in which the first authentication node authenticates the first terminal.

Specifically, the process in which the first authentication node authenticates the first terminal may include: The first authentication node receives an authentication request of the first terminal, and the first authentication node authenticates the first terminal to obtain the first security group to which the first terminal belongs, obtains the first security group association information of the first terminal based on the network address of the first terminal and the first security group, and sends the first security group association information to the synchronization node. For this process, refer to the foregoing embodiment of FIG. 9. Details are not described herein.

Optionally, if the first security group association information is encoded, the synchronization node may receive the encoded first security group association information, and decode the encoded first security group association information to obtain the first security group association information.

Optionally, if the first security group association information is compressed, the synchronization node may receive the compressed first security group association information, and decompress the compressed first security group association information to obtain the first security group association information.

1402: The synchronization node receives second security group association information of a second terminal that is sent by a second authentication node.

The second authentication node is different from the first authentication node, and the second authentication node and the first authentication node may be any two different authentication nodes in a network. For example, the second authentication node and the first authentication node may be deployed at different geographical locations.

The second security group association information is used to indicate a mapping relationship between a network address of the second terminal and a second security group to which the second terminal belongs. For example, the second security group association information may include the network address of the second terminal and a group identifier of the second security group. The second security group association information may be generated in a process in which the second authentication node authenticates the second terminal.

Specifically, the process in which the second authentication node authenticates the second terminal may include: The second authentication node receives an authentication request of the second terminal, and the second authentication node authenticates the second terminal to obtain the second security group to which the second terminal belongs, obtains the second security group association information of the second terminal based on the network address of the second terminal and the second security group, and sends the second security group association information to the synchronization node. For this process, refer to the foregoing embodiment of FIG. 10. Details are not described herein.

It should be noted that, that step 1401 is described before step 1402 is merely for ease of description. In this embodiment, a time sequence of step 1401 and step 1402 is not limited. For example, step 1401 may be performed before step 1402. For another example, step 1402 may be performed before step 1401. For still another example, step 1401 and step 1402 may be simultaneously performed.

Optionally, if the second security group association information is encoded, the synchronization node may receive the encoded second security group association information, and decode the encoded second security group association information to obtain the second security group association information.

Optionally, if the second security group association information is compressed, the synchronization node may receive the compressed second security group association information, and decompress the compressed second security group association information to obtain the second security group association information.

1403: The synchronization node determines at least one execution node including a first target execution node, where the first target execution node is configured to process, based on a security group policy, a packet transmitted between the first terminal and the second terminal.

Optionally, a process in which the synchronization node determines the at least one execution node may include the following implementations 1 and 2.

Implementation 1: The synchronization node determines the first target execution node.

Optionally, the implementation 1 may include: The synchronization node obtains, from a correspondence between a network segment and an execution node and based on a first target network segment to which the network address of the first terminal belongs, a first target execution node corresponding to the first target network segment, and obtains, from the correspondence between a network segment and an execution node and based on a second target network segment to which the network address of the second terminal belongs, a first target execution node corresponding to the second target network segment.

The first target network segment is a network segment to which the network address of the first terminal belongs, and the second target network segment is a network segment to which the network address of the second terminal belongs. Optionally, the first target network segment and the second target network segment may be different, an execution node corresponding to the first target network segment and an execution node corresponding to the second target network segment are the same, and both the execution node corresponding to the first target network segment and the execution node corresponding to the second target network segment are the first target execution node. Optionally, the first target network segment and the second target network segment may be the same, and both an execution node corresponding to the first target network segment and an execution node corresponding to the second target network segment are the first target execution node.

Implementation 2: Each execution node in the network is determined.

Optionally, the synchronization node may encode the first security group association information based on a structured data format, to obtain the encoded first security group association information.

Optionally, the synchronization node may compress the first security group association information, to obtain the compressed first security group association information.

1404: The synchronization node sends the first security group association information to the at least one execution node.

Step 1404 may be similar to step 1003 in the foregoing embodiment of FIG. 10, and details are not described herein.

Optionally, the synchronization node may send the encoded first security group association information to the at least one execution node. Optionally, the synchronization node may send the compressed first security group association information to the at least one execution node.

Optionally, the security group association information of at least one of the first terminal and the second terminal may be updated. Correspondingly, the authentication node may send the updated security group association information of the first terminal to the synchronization node, or may send the updated security group association information of the second terminal to the synchronization node.

Specifically, a case of updating the security group association information of the first terminal may include at least one of the following cases (1) to (3).

Case (1): The network address of the first terminal is updated, and a method performed by the authentication node may further include the following steps (1.1) to (1.3).

Step (1.1): The first authentication node obtains the updated network address of the first terminal.

Optionally, when the network address of the first terminal is updated, the first terminal may send the updated network address to the first authentication node, and the first authentication node may receive the updated network address of the first terminal, to obtain the updated network address. Specifically, when the network address of the first terminal is updated, the first terminal may send the updated network address to an authentication point device, and a first authentication point device may receive the updated network address of the first terminal, and send the updated network address to an authorization device. The first authentication point device may generate a network address update request based on the updated network address of the first terminal, and the first network address update request carries the updated network address. The authorization device may receive the first network address update request, and parse the first network address update request to obtain the updated network address.

Step (1.2): The first authentication node obtains updated first security group association information of the first terminal based on the updated network address and the first security group.

The updated first security group association information is used to indicate a mapping relationship between the updated network address and the first security group to which the first terminal belongs. For example, the updated first security group association information may include the updated network address of the first terminal and the group identifier of the first security group.

Step (1.3): The first authentication node sends the updated first security group association information to the synchronization node.

Corresponding to the case (1), the method provided in this embodiment may include the following steps a and b:
Step a: The synchronization node receives the updated first security group association information of the first terminal that is sent by the first authentication node.
Step b: The synchronization node sends the updated first security group association information to the at least one execution node.

The updated first security group association information is used to indicate the mapping relationship between the updated network address of the first terminal and the first security group.

Case (2): The security group to which the first terminal belongs is updated. Correspondingly, a method performed by the authentication node may further include the following steps (2.1) to (2.3).

Step (2.1): The first authentication node obtains the updated first security group of the first terminal.

Specifically, the first authentication node may obtain updated authentication information of the first terminal, and obtain, from a correspondence between authentication information and a first security group and based on the updated authentication information of the first terminal, the updated first security group to which the first terminal belongs.

The updated authentication information may include updated location information, updated other information, updated user information, and the like. The updated location information is used to indicate an updated location of the first terminal. The updated other information may include an updated time period and an updated first terminal group. The updated user information may include an updated department, an updated role, an updated account, and the like.

Optionally, a manner of obtaining the updated first security group may include either of or a combination of the following manners 1 and 2.

Manner 1: The first authentication node may obtain the updated location information of the first terminal, and obtain, from a correspondence between location information and a first security group and based on the updated location information, the updated first security group to which the first terminal belongs.

Optionally, the correspondence between location information and a first security group may include at least one piece of location information and an identifier of at least one first security group. The correspondence between location information and a first security group may be preconfigured on the first authentication node, for example, preconfigured on a 3A server.

Manner 2: The first authentication node may obtain the updated time period, and obtain, from a correspondence between a time period and a first security group and based on the updated time period, the updated first security group to which the first terminal belongs.

Optionally, the correspondence between a time period and a first security group may include at least one time period and an identifier of at least one first security group. The correspondence between a time period and a first security group may be preconfigured on the first authentication node.

Step (2.2): The first authentication node obtains the updated first security group association information of the first terminal based on the network address of the first terminal and the updated first security group to which the first terminal belongs.

The updated first security group association information is used to indicate a mapping relationship between the network address of the first terminal and the updated first security group to which the first terminal belongs. For example, the updated first security group association information may include the network address of the first terminal and a group identifier of the updated first security group.

Step (2.3): The first authentication node sends the updated first security group association information of the first terminal to the synchronization node.

Corresponding to the case (2), the method provided in this embodiment may include the following steps a and b:
Step a: The synchronization node receives the updated first security group association information of the first terminal that is sent by the first authentication node.
Step b: The synchronization node sends the updated first security group association information to the at least one execution node.

The updated first security group association information is used to indicate the mapping relationship between the network address of the first terminal and the updated first security group to which the first terminal belongs.

Case (3): Both the network address of the first terminal and the security group to which the first terminal belongs are updated. Correspondingly, the method provided in this embodiment may further include the following steps (3.1) to (3.3).

Step (3.1): The first authentication node obtains the updated network address of the first terminal and the updated first security group to which the first terminal belongs.

Step (3.1) is similar to step (1.1) and step (1.2), and details are not described herein.

Step (3.2): The first authentication node obtains the updated first security group association information of the first terminal based on the updated network address of the first terminal and the updated first security group to which the first terminal belongs.

The updated first security group association information is used to indicate a mapping relationship between the updated network address of the first terminal and the updated first security group to which the first terminal belongs. For example, the updated first security group association information may include the updated network address of the first terminal and a group identifier of the updated first security group.

Step (3.3): The first authentication node sends the updated first security group association information to the synchronization node.

Corresponding to the case (3), the method provided in this embodiment may include the following steps a and b:
Step a: The synchronization node receives the updated first security group association information of the first terminal that is sent by the first authentication node.
Step b: The synchronization node sends the updated first security group association information to the at least one execution node.

The updated first security group association information is used to indicate the mapping relationship between the updated network address of the first terminal and the updated first security group to which the first terminal belongs.

Similarly, optionally, the second security group association information of the second terminal may also be updated. A case of updating the second security group association information may include at least one of the following cases (1) to (3).

Case (1): The network address of the second terminal is updated, and a method performed by the authentication node may further include the following steps (1.1) to (1.3).

Step (1.1): The second authentication node obtains the updated network address of the second terminal.

Optionally, when the network address of the second terminal is updated, the second terminal may send the updated network address to the second authentication node, and the second authentication node may receive the updated network address of the second terminal, to obtain the updated network address. Specifically, when the network address of the second terminal is updated, the second terminal may send the updated network address to a second authentication point device, and the authentication point device may receive the updated network address of the second terminal, and send the updated network address to an authorization device. The authentication point device may generate a network address update request based on the updated network address of the second terminal, and the network address update request carries the updated network address. The authorization device may receive the network address update request, and parse the network address update request to obtain the updated network address.

Step (1.2): The second authentication node obtains the updated second security group association information of the second terminal based on the updated network address and the second security group.

The updated second security group association information is used to indicate a mapping relationship between the updated network address and the second security group to which the second terminal belongs. For example, the updated second security group association information may include the updated network address of the second terminal and the group identifier of the second security group.

Step (1.3): The second authentication node sends the updated second security group association information to the synchronization node.

Corresponding to the case (1), the method provided in this embodiment may include the following steps a and b:
Step a: The synchronization node receives the updated second security group association information of the second terminal that is sent by the second authentication node.
Step b: The synchronization node sends the updated second security group association information to the at least one execution node.

The updated second security group association information is used to indicate the mapping relationship between the updated network address of the second terminal and the second security group.

Case (2): The security group to which the second terminal belongs is updated. Correspondingly, the method provided in this embodiment may further include the following steps (2.1) to (2.3).

Step (2.1): The second authentication node obtains the updated second security group of the second terminal.

Specifically, the second authentication node may obtain updated authentication information of the second terminal, and obtain, from a correspondence between authentication information and a second security group and based on the updated authentication information of the second terminal, the updated second security group to which the second terminal belongs.

The updated authentication information may include updated location information, updated other information, updated user information, and the like. The updated location information is used to indicate an updated location of the second terminal. The updated other information may include an updated time period and an updated second terminal group. The updated user information may include an updated department, an updated role, an updated account, and the like.

Optionally, a manner of obtaining the updated second security group may include either of or a combination of the following manners 1 and 2.

Manner 1: The second authentication node may obtain the updated location information of the second terminal, and obtain, from a correspondence between location information and a second security group and based on the updated location information, the updated second security group to which the second terminal belongs.

Optionally, the correspondence between location information and a second security group may include at least one piece of location information and an identifier of at least one second security group. The correspondence between location information and a second security group may be preconfigured on the second authentication node, for example, preconfigured on a 3A server.

Manner 2: The second authentication node may obtain the updated time period, and obtain, from a correspondence between a time period and a second security group and based on the updated time period, the updated second security group to which the second terminal belongs.

Optionally, the correspondence between a time period and a second security group may include at least one time period and an identifier of at least one second security group. The correspondence between a time period and a second security group may be preconfigured on the second authentication node.

Step (2.2): The second authentication node obtains the updated second security group association information of the second terminal based on the network address of the second terminal and the updated second security group to which the second terminal belongs.

The updated second security group association information is used to indicate a mapping relationship between the network address of the second terminal and the updated second security group to which the second terminal belongs. For example, the updated second security group association information may include the network address of the second terminal and a group identifier of the updated second security group.

Step (2.3): The second authentication node sends the updated second security group association information of the second terminal to the synchronization node.

Corresponding to the case (2), the method provided in this embodiment may include the following steps a and b:
Step a: The synchronization node receives the updated first security group association information of the first terminal that is sent by the first authentication node.
Step b: The synchronization node sends the updated first security group association information to the at least one execution node.

The updated first security group association information is used to indicate the mapping relationship between the network address of the first terminal and the updated first security group to which the first terminal belongs.

Case (3): Both the network address of the second terminal and the security group to which the second terminal belongs are updated. Correspondingly, the method provided in this embodiment may further include the following steps (3.1) to (3.3).

Step (3.1): The second authentication node obtains the updated network address of the second terminal and the updated second security group to which the second terminal belongs.

Step (3.1) is similar to step (1.1) and step (1.2), and details are not described herein.

Step (3.2): The second authentication node obtains the updated second security group association information of the second terminal based on the updated network address of the second terminal and the updated second security group to which the second terminal belongs.

The updated second security group association information is used to indicate a mapping relationship between the updated network address of the second terminal and the updated second security group to which the second terminal belongs. For example, the updated second security group association information may include the updated network address of the second terminal and a group identifier of the updated second security group.

Step (3.3): The second authentication node sends the updated second security group association information of the second terminal to the synchronization node.

Corresponding to the case (3), the method provided in this embodiment may include the following steps a and b:
Step a: The synchronization node receives the updated second security group association information of the second terminal that is sent by the second authentication node.
Step b: The synchronization node sends the updated second security group association information to the at least one execution node.

The updated second security group association information is used to indicate the mapping relationship between the updated network address of the second terminal and the updated second security group to which the second terminal belongs.

In the method provided in this embodiment, the synchronization node synchronizes the first security group association information of the first terminal and the second security group association information of the second terminal to the execution node, so that the execution node can simultaneously hold security group association information of terminals authenticated by two different authentication nodes, and therefore the execution node can perceive security groups to which the terminals authenticated by the two different authentication nodes belong. In this way, when receiving a packet transmitted between the terminals authenticated by the two different authentication nodes, the execution node may process the packet based on a security group policy that matches the security groups to which the two terminals belong, to control rights of mutual access between the terminals that perform access across the authentication nodes.

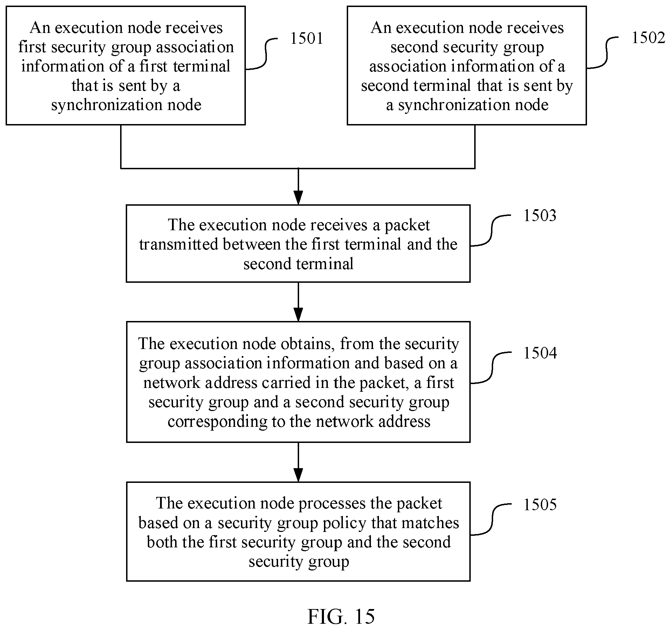

FIG. 15 is a flowchart of a packet processing method according to an embodiment of this application. As shown in FIG. 15, the method may be performed by an execution node and includes the following steps.

1501: The execution node receives first security group association information of a first terminal that is sent by a synchronization node.

Step 1501 may be similar to step 1201 in the foregoing embodiment of FIG. 12, and details are not described herein.

Optionally, if the first security group association information is encoded, the execution node may receive the encoded first security group association information, and decode the encoded first security group association information to obtain the first security group association information.

Optionally, if the first security group association information is compressed, the execution node may receive the compressed first security group association information, and decompress the compressed first security group association information to obtain the first security group association information.

1502: The execution node receives second security group association information of a second terminal that is sent by a synchronization node.

Step 1502 may be similar to step 1201 in the foregoing embodiment of FIG. 12, and details are not described herein.

It should be noted that, that step 1501 is described before step 1502 is merely for ease of description. In this embodiment, a time sequence of step 1501 and step 1502 is not limited. For example, step 1501 may be performed before step 1502. For another example, step 1502 may be performed before step 1501. For still another example, step 1501 and step 1502 may be simultaneously performed.

Optionally, if the second security group association information is encoded, the execution node may receive the encoded second security group association information, and decode the encoded second security group association information to obtain the second security group association information. Optionally, if the second security group association information is compressed, the execution node may receive the compressed second security group association information, and decompress the compressed second security group association information to obtain the second security group association information.

1503: The execution node receives a packet transmitted between the first terminal and the second terminal.

The packet transmitted between the first terminal and the second terminal may include at least one of a packet sent by the first terminal to the second terminal and a packet sent by the second terminal to the first terminal.

For the packet sent by the first terminal to the second terminal, a source network address of the packet may be a network address of the first terminal, and a destination network address of the packet may be a network address of the second terminal. Correspondingly, step 1503 may include: The execution node receives a packet that is sent by the first terminal and that is to be sent to the second terminal.

For the packet sent by the second terminal to the first terminal, a source network address of the packet may be the network address of the second terminal, and a destination network address of the packet may be the network address of the first terminal. Correspondingly, step 1503 may include: The execution node receives a packet that is sent by the second terminal and that is to be sent to the first terminal.

1504: The execution node obtains, from the security group association information and based on a network address carried in the packet, a first security group and a second security group corresponding to the network address.

By performing step 1501 and step 1502, the execution node obtains not only the security group association information of the first terminal authenticated by a first authentication node, but also the security group association information of the second terminal authenticated by a second authentication node, to simultaneously hold security group association information of terminals that perform access from different authentication nodes. Therefore, when a packet transmitted between different terminals arrives at the execution node, the execution node may control rights of mutual access between the different terminals by using security group association information of the different terminals.

If the packet is the packet sent by the first terminal to the second terminal, step 1504 may include the following (1.1) and (1.2):
(1.1): Obtain, from the first security group association information and based on the source network address carried in the packet, the first security group corresponding to the source network address. Specifically, if the source network address of the packet is the network address of the first terminal, the first security group to which the first terminal belongs may be determined based on the network address of the first terminal and the first security group association information of the first terminal.
(1.2): Obtain, from the second security group association information and based on the destination network address carried in the packet, the second security group corresponding to the destination network address, where the destination network address is the network address of the second terminal. Specifically, if the destination network address of the packet is the network address of the second terminal, the second security group to which the second terminal belongs may be determined based on the network address of the second terminal and the second security group association information of the second terminal.

If the packet is the packet sent by the second terminal to the first terminal, step 1504 may include the following (2.1) and (2.2):
(2.1): Obtain, from the second security group association information and based on the source network address carried in the packet, the second security group corresponding to the source network address. Specifically, if the source network address of the packet is the network address of the second terminal, the second security group to which the second terminal belongs may be determined based on the network address of the second terminal and the second security group association information of the second terminal.
(2.2): Obtain, from the first security group association information and based on the destination network address carried in the packet, the first security group corresponding to the destination network address. Specifically, if the destination network address of the packet is the network address of the first terminal, the first security group to which the first terminal belongs may be determined based on the network address of the first terminal and the first security group association information of the first terminal.

1505: The execution node processes the packet based on a security group policy that matches both the first security group and the second security group.

Optionally, the execution node may match, based on the first security group to which the first terminal belongs and the second security group to which the second terminal belongs, the security group policy corresponding to the first security group and the second security group. In a possible implementation, the execution node may obtain, from a correspondence between a security group and a security group policy and based on the first security group to which the first terminal belongs and the second security group to which the second terminal belongs, the security group policy corresponding to the first security group and the second security group. For descriptions of the correspondence between a security group and a security group policy, refer to step 1204 in the foregoing embodiment of FIG. 12. Details are not described herein.

For a manner of matching the security group policy based on the correspondence between a security group and a security group policy, it is assumed that a security group policy in which a source security group is the first security group and a destination security group is the second security group is referred to as a first security group policy, and a security group policy in which a source security group is the second security group and a destination security group is the first security group is referred to as a second security group policy. For the manner of matching the security group policy, refer to the following cases 1 and 2:
Case 1: If the packet is the packet sent by the first terminal to the second terminal, the manner of matching the security group policy may include: obtaining the first security group policy from the correspondence between a security group and a security group policy. For example, as shown in Table 3 above, assuming that the packet is a packet sent by a terminal of an employee on the move to a terminal of an outsourced employee, the source security group is the employee on the move, and the destination security group is the outsourced employee. The manner of matching the security group policy may include: obtaining, from the correspondence between a security group and a security group policy, a security group policy in which a source security group is the employee on the move and a destination security group is the outsourced employee, namely, "allowed to access, low priority".
Case 2: If the packet is the packet sent by the second terminal to the first terminal, the manner of matching the security group policy may include: obtaining the second security group policy from the correspondence between a security group and a security group policy. For example, as shown in Table 3 above, assuming that the packet is a packet sent by a terminal of an outsourced employee to a terminal of an employee on the move, the source security group is the outsourced employee, and the destination security group is the employee on the move. The manner of matching the security group policy may include: obtaining, from the correspondence between a security group and a security group policy, a security group policy in which a source security group is the outsourced employee and a destination security group is the employee on the move, namely, "prohibited from accessing".

Optionally, the first security group policy and the second security group policy may be different. In this way, a manner of processing the packet sent by the first terminal to the second terminal and a manner of processing the packet sent by the second terminal to the first terminal may be different. Specifically, either of or a plurality of the following implementations (1) and (2) may be included.
Implementation (1): An access rights control policy in the first security group policy and an access rights control policy in the second security group policy may be different, thereby implementing a function that rights of accessing the second terminal by the first terminal are different from rights of accessing the first terminal by the second terminal. For example, the first terminal may be allowed to access the second terminal, and the second terminal may be prohibited from accessing the first terminal. In an example scenario, a terminal of an administrator may be allowed to access the terminal of the outsourced employee, and the terminal of the outsourced employee is prohibited from accessing the terminal of the administrator.
Implementation (2): An experience assurance policy in the first security group policy and an experience assurance policy in the second security group policy may be different, thereby implementing a function that quality of service of accessing the second terminal by the first terminal is different from quality of service of accessing the first terminal by the second terminal. For example, a packet for accessing the second terminal by the first terminal may be forwarded in a high priority, and a packet for accessing the first terminal by the second terminal is forwarded in a low priority.

Certainly, that the first security group policy and the second security group policy are different is merely an optional manner. The first security group policy and the second security group policy may also be the same. This is not limited in this embodiment.

Optionally, if a network address and/or a security group of at least one of the first terminal and the second terminal are/is updated, security group association information of the at least one of the first terminal and the second terminal may be updated. Correspondingly, the method provided in this embodiment may further include the following steps (1.1) to (1.4).

Step (1.1): The execution node receives updated first security group association information of the first terminal that is sent by the synchronization node, where the updated first security group association information is used to indicate a mapping relationship between an updated network address of the first terminal and the first security group, or the updated first security group association information is used to indicate a mapping relationship between the network address of the first terminal and an updated first security group to which the first terminal belongs, or the updated first security group association information is used to indicate a mapping relationship between an updated network address of the first terminal and an updated first security group to which the first terminal belongs.

Optionally, the execution node may update stored first security group association information of the first terminal to the updated first security group association information.

Step (1.2): The execution node receives a packet transmitted between the first terminal and the second terminal.

For the packet sent by the first terminal to the second terminal, the source network address of the packet may be the updated network address of the first terminal, and the destination network address of the packet may keep unchanged, and is still the network address of the second terminal. For the packet sent by the second terminal to the first terminal, the source network address of the packet may keep unchanged, and is still the network address of the second terminal, and the destination network address of the packet may be the updated network address of the first terminal.

Step (1.3): The execution node obtains, from the updated first security group association information and the second security group association information and based on a network address carried in the packet, a first security group corresponding to the updated network address of the first terminal and the second security group corresponding to the network address of the second terminal.

Step (1.4): The execution node processes the packet based on a security group policy that matches both the first security group and the second security group.

If the security group association information of the second terminal is updated, the method provided in this embodiment may further include the following steps (2.1) to (2.4).

Step (2.1): The execution node receives updated second security group association information of the second terminal that is sent by the synchronization node, where the updated second security group association information is used to indicate a mapping relationship between an updated network address of the second terminal and the second security group, or the updated second security group association information is used to indicate a mapping relationship between the network address of the second terminal and an updated second security group to which the second terminal belongs, or the updated second security group association information is used to indicate a mapping relationship between an updated network address of the second terminal and an updated second security group to which the second terminal belongs.

Optionally, the execution node may update stored second security group association information of the second terminal to the updated second security group association information.

Step (2.2): The execution node receives a packet transmitted between the first terminal and the second terminal.

For the packet sent by the first terminal to the second terminal, the source network address of the packet may keep unchanged, and is still the network address of the first terminal, and the destination network address of the packet may be the updated network address of the second terminal. For the packet sent by the second terminal to the first terminal, the source network address of the packet may be the updated network address of the second terminal, and the destination network address of the packet may keep unchanged, and is still the network address of the first terminal.

Step (2.3): The execution node obtains, from the first security group association information and the updated second security group association information and based on a network address carried in the packet, the first security group corresponding to the network address of the first terminal and a second security group corresponding to the updated network address of the second terminal.

Step (2.4): The execution node processes the packet based on a security group policy that matches both the first security group and the second security group.

It should be noted that the foregoing steps (1.1) to (1.4) and steps (2.1) to (2.4) are merely optional steps but not mandatory steps. In addition, any one or all of the foregoing steps (1.1) to (1.4) and steps (2.1) to (2.4) may be performed.

In the method provided in this embodiment, by receiving the first security group association information of the first terminal and the second security group association information of the second terminal that are sent by the synchronization node, the execution node can simultaneously hold security group association information of terminals authenticated by two different authentication nodes, and therefore can perceive security groups to which the terminals authenticated by the two different authentication nodes belong. In this way, when receiving a packet transmitted between the terminals authenticated by the two different authentication nodes, the execution node may process the packet based on a security group policy that matches the security groups to which the two terminals belong, to control rights of mutual access between the terminals that perform access across the authentication nodes.

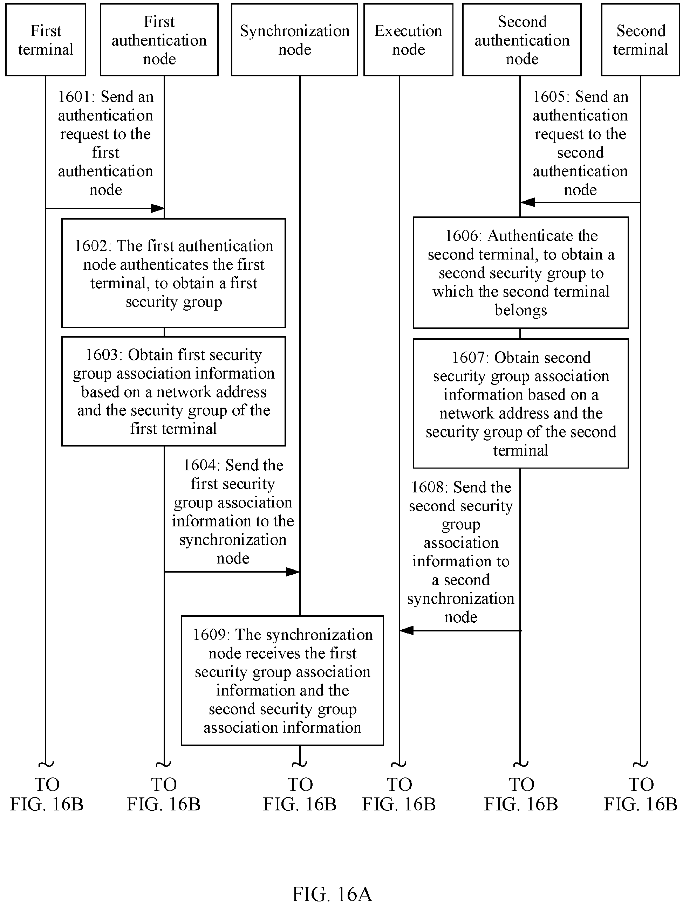

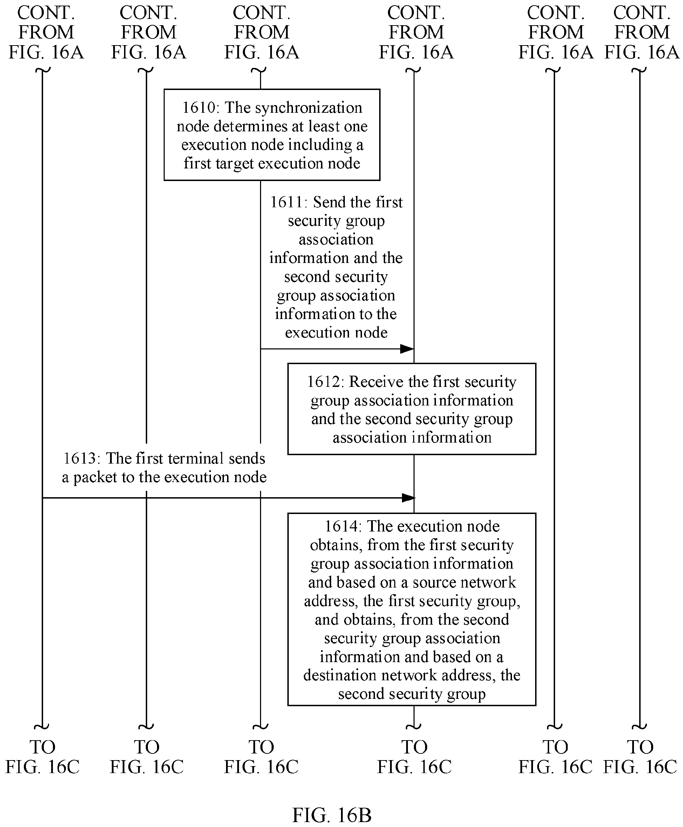

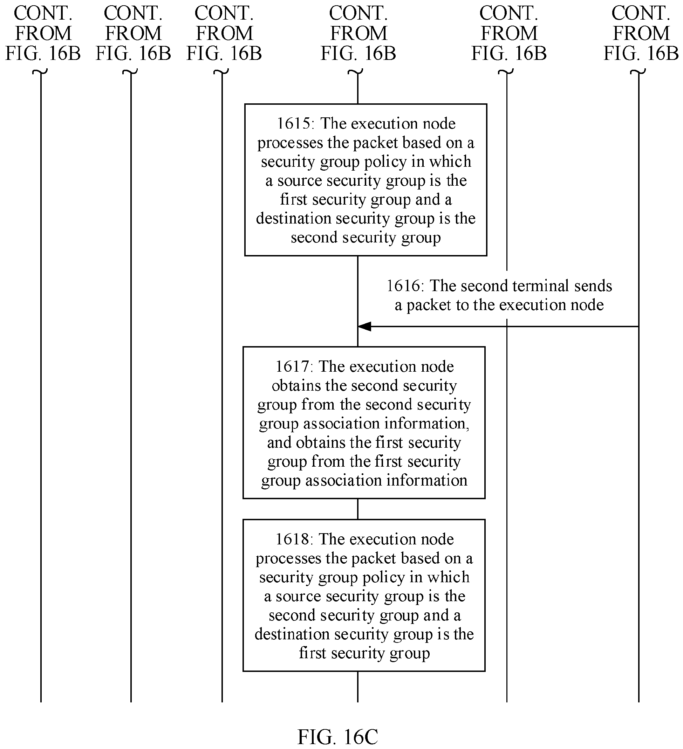

FIG. 16A to FIG. 16C are a flowchart of a service processing method according to an embodiment of this application. As shown in FIG. 16A to FIG. 16C, interaction bodies include a first terminal, a second terminal, a first authentication node, a second authentication node, a synchronization node, and an execution node, and the method includes the following steps.

1601: The first terminal sends an authentication request to the first authentication node.

1602: When the first authentication node receives the authentication request of the first terminal, the first authentication node authenticates the first terminal, to obtain a first security group to which the first terminal belongs.

1603: The first authentication node obtains security group association information of the first terminal based on a network address and the security group of the first terminal, where the first security group association information is used to indicate a mapping relationship between the network address and the security group to which the terminal belongs.

1604: The first authentication node sends the first security group association information to the synchronization node.

1605: The second terminal sends an authentication request to the second authentication node.

1606: When the second authentication node receives the authentication request of the second terminal, the second authentication node authenticates the second terminal, to obtain a second security group to which the second terminal belongs.

1607: The second authentication node obtains second security group association information based on a network address and the security group of the second terminal.

1608: The second authentication node sends the second security group association information to a second synchronization node.

It should be noted that, that steps 1601 to 1604 are described before steps 1605 to 1608 is merely for ease of description. In this embodiment, a time sequence of two processes, namely, steps 1601 to 1604 and steps 1605 to 1608, is not limited. For example, steps 1601 to 1604 may be performed before steps 1605 to 1608. For another example, steps 1601 to 1604 may be performed after steps 1605 to 1608. For still another example, steps 1601 to 1604 and steps 1605 to 1608 may be simultaneously performed. That steps 1601 to 1604 are performed before steps 1605 to 1608 may include a case in which an execution time period of steps 1601 to 1604 is earlier than an execution time period of steps 1605 to 1608, or may include a case in which an execution time period of steps 1601 to 1604 overlaps an execution time period of steps 1605 to 1608 and an execution time point of step 1604 is earlier than an execution time point of step 1605. Similarly, that steps 1601 to 1604 are performed after steps 1605 to 1608 may include a case in which an execution time period of steps 1601 to 1604 is later than an execution time period of steps 1605 to 1608, or may include a case in which an execution time period of steps 1601 to 1604 overlaps an execution time period of steps 1605 to 1608 and an execution time point of step 1601 is later than an execution time point of step 1608.

1609: The synchronization node receives the first security group association information of the first terminal that is sent by the first authentication node and the second security group association information of the second terminal that is sent by the second authentication node.

1610: The synchronization node determines at least one execution node including a first target execution node, where the first target execution node is configured to process a packet of the terminal based on a security group policy.

1611: The synchronization node sends the first security group association information of the first terminal and the second security group association information of the second terminal to the at least one execution node.

1612: The execution node receives the first security group association information of the first terminal and the second security group association information of the second terminal.

The following describes, by using steps 1613 to 1615, a packet processing procedure performed when the first terminal accesses the second terminal, and describes, by using steps 1616 to 1618, a packet processing procedure performed when the second terminal accesses the first terminal. It should be noted that, that steps 1613 to 1615 are described before steps 1616 to 1618 is merely for ease of description. In this embodiment, a time sequence of two processes, namely, steps 1613 to 1615 and steps 1616 to 1618, is not limited.

1613: The first terminal sends a packet to the execution node.

The first terminal may use a network address of a local end as a source network address of the packet, use a network address of the second terminal as a destination network address of the packet, generate, based on the source network address and the destination network address, a packet to be sent to the second terminal, and send the packet to the execution node. Optionally, the first terminal may send the packet to the authentication node, and the authentication node may receive the packet sent by the first terminal, and send the packet to the execution node.

1614: When the execution node receives the packet of the first terminal, the execution node obtains, from the first security group association information and based on the source network address carried in the packet of the first terminal, the first security group corresponding to the source network address, and obtains, from the second security group association information and based on the destination network address carried in the packet of the first terminal, the second security group corresponding to the destination network address.

1615: The execution node processes the packet based on a security group policy in which a source security group is the first security group and a destination security group is the second security group.

1616: The second terminal sends a packet to the execution node.

The second terminal may use a network address of a local end as a source network address of the packet, use a network address of the first terminal as a destination network address of the packet, generate, based on the source network address and the destination network address, a packet to be sent to the first terminal, and send the packet to the execution node. Optionally, the second terminal may send the packet to the authentication node, and the authentication node may receive the packet sent by the second terminal, and send the packet to the execution node.

1617: When the execution node receives the packet of the second terminal, the execution node obtains, from the second security group association information and based on the source network address carried in the packet of the second terminal, the second security group corresponding to the source network address, and obtains, from the first security group association information and based on the destination network address carried in the packet of the second terminal, the first security group corresponding to the destination network address.

1618: The execution node processes the packet based on a security group policy in which a source security group is the second security group and a destination security group is the first security group.

Optionally, the method provided in this embodiment of this application may be applied to a scenario in which the terminal and a network resource access each other. For specific implementation, refer to the following embodiments of FIG. 17 to FIG. 19A and FIG. 19B.

To distinguish from descriptions in the embodiments of FIG. 14 to FIG. 16A to FIG. 16C, an authentication node in an embodiment of FIG. 17 is referred to as a third authentication node, a terminal authenticated by the third authentication node is referred to as a third terminal, a security group to which the third terminal belongs is referred to as a third security group, a security group to which a network resource belongs is referred to as a fourth security group, and an execution node that receives a packet transmitted between the third terminal and the network resource is referred to as a second target execution node.

FIG. 17 is a flowchart of an information synchronization method according to an embodiment of this application. As shown in FIG. 17, the method is performed by a synchronization node and includes the following steps.

1701: The synchronization node receives third security group association information of a third terminal that is sent by a third authentication node.

The third security group association information is used to indicate a mapping relationship between a network address of the third terminal and a third security group to which the third terminal belongs. For example, the third security group association information may include the network address of the third terminal and a group identifier of the third security group. The third security group association information may be generated in a process in which the third authentication node authenticates the third terminal.

Specifically, the process in which the third authentication node authenticates the third terminal may include: The third authentication node receives an authentication request of the third terminal, and the third authentication node authenticates the third terminal to obtain the third security group to which the third terminal belongs, obtains the third security group association information of the third terminal based on the network address of the third terminal and the third security group, and sends the third security group association information to the synchronization node. For this process, refer to the foregoing embodiment of FIG. 9. Details are not described herein.

Optionally, if the third security group association information is encoded, the synchronization node may receive the encoded third security group association information, and decode the encoded third security group association information to obtain the third security group association information.

Optionally, if the third security group association information is compressed, the synchronization node may receive the compressed third security group association information, and decompress the compressed third security group association information to obtain the third security group association information.

1702: The synchronization node determines at least one execution node including a second target execution node, where the second target execution node is configured to process, based on a security group policy, a packet transmitted between the third terminal and a network resource.

Optionally, a process in which the synchronization node determines the at least one execution node may include the following implementations 1 and 2.

Implementation 1: The synchronization node determines the second target execution node.

Optionally, the implementation 1 may include: The synchronization node determines, from a correspondence between a network segment and an execution node and based on a third target network segment to which the network address of the third terminal belongs, a second target execution node corresponding to the third target network segment. The third target network segment is a network segment to which the network address of the third terminal belongs.

Implementation 2: Each execution node in a network is determined.

Optionally, the synchronization node may encode the third security group association information based on a structured data format, to obtain the encoded third security group association information.

Optionally, the synchronization node may compress the third security group association information, to obtain the compressed third security group association information.

1703: The synchronization node sends the third security group association information to the at least one execution node.

Step 1704 may be similar to step 903 in the foregoing embodiment of FIG. 9, and details are not described herein.

Optionally, the synchronization node may send the encoded third security group association information to the at least one execution node. Optionally, the synchronization node may send the compressed third security group association information to the at least one execution node.

In the method provided in this embodiment, the synchronization node synchronizes the third security group association information of the third terminal to the execution node, so that the execution node can hold the security group association information of the third terminal authenticated by the third authentication node, and therefore the execution node can perceive the third security group to which the third terminal belongs. In this way, when receiving the packet transmitted between the third terminal and the network resource, the execution node may process the packet based on a security group policy that matches the third security group to which the third terminal and the network resource belong, to control rights of mutual access between the third terminal and the network resource.

FIG. 18 is a flowchart of a packet processing method according to an embodiment of this application. As shown in FIG. 18, the method may be performed by an execution node and includes the following steps.

1801: The execution node receives third security group association information of a third terminal that is sent by a synchronization node.

Step 1801 may be similar to step 1201 in the foregoing embodiment of FIG. 12, and details are not described herein.

Optionally, if the third security group association information is encoded, the execution node may receive the encoded third security group association information, and decode the encoded third security group association information to obtain the third security group association information.

Optionally, if the third security group association information is compressed, the execution node may receive the compressed third security group association information, and decompress the compressed third security group association information to obtain the third security group association information.

1802: The execution node receives a packet transmitted between the third terminal and a network resource.

The packet transmitted between the third terminal and the network resource may include at least one of a packet sent by the third terminal to the network resource and a packet sent by the network resource to the third terminal.

For the packet sent by the third terminal to the network resource, a source network address of the packet may be a network address of the third terminal, and a destination network address of the packet may be a network address of the network resource. Correspondingly, step 1802 may include: The execution node receives a packet that is sent by the third terminal and that is to be sent to the network resource.

For the packet sent by the network resource to the third terminal, a source network address of the packet may be the network address of the network resource, and a destination network address of the packet may be the network address of the third terminal. Step 1802 may include: The execution node receives a packet that is sent by the network resource and that is to be sent to the third terminal.

1803: The execution node obtains, from the third security group association information, a third security group corresponding to the network address of the third terminal, and obtains, from configuration information, a fourth security group corresponding to the network address of the network resource.

By performing step 1802, the execution node obtains the security group association information of the third terminal authenticated by a third authentication node. In addition, the execution node may pre-store the configuration information, and when the packet transmitted between the third terminal and the network resource arrives at the execution node, the execution node may control rights of mutual access between the third terminal and the network resource by using the security group association information of the third terminal and security group association information of the network resource.

The configuration information is used to indicate a security group to which the network resource belongs, and the configuration information may include a network address of at least one network resource and a group identifier of at least one security group. For example, the configuration information may be shown in Table 6 below. The execution node may query the configuration information the network address of the network resource, to obtain the security group corresponding to the network resource, namely, the fourth security group. The configuration information may be generated by using a configuration instruction. For example, at a deployment stage, an administrator may trigger a configuration operation on an authorization node, and the authorization node may receive the configuration instruction, generate the configuration information according to the configuration instruction, and send the configuration information to the execution node. Certainly, the execution node may also send a query request to the authorization node, to obtain the configuration information from the authorization node. A manner of obtaining the configuration information by the execution node is not limited in this embodiment.

**Table 6**

| Network address of a network resource | Group identifier of a security group |
|---|---|
| 202.178.100.1 | 100 |
| 202.178.100.2 | 200 |
| 202.178.100.3 | 300 |

If the packet is the packet sent by the third terminal to the network resource, step 1804 may include the following (1.1) and (1.2).

(1.1): Obtain, from the third security group association information and based on the source network address carried in the packet, the third security group corresponding to the source network address. Specifically, if the source network address of the packet is the network address of the third terminal, the third security group to which the third terminal belongs may be determined based on the network address of the third terminal and the third security group association information of the third terminal.

(1.2): Obtain, from fourth security group association information and based on the destination network address carried in the packet, the fourth security group corresponding to the destination network address, where the destination network address is the network address of the network resource. Specifically, if the destination network address of the packet is the network address of the network resource, the fourth security group to which the network resource belongs may be determined based on the network address of the network resource and the configuration information.

If the packet is the packet sent by the network resource to the third terminal, step 1804 may include the following (2.1) and (2.2).

(2.1): Obtain, from fourth security group association information and based on the source network address carried in the packet, the fourth security group corresponding to the source network address. Specifically, if the source network address of the packet is the network address of the network resource, the fourth security group to which the network resource belongs may be determined based on the network address of the network resource and the configuration information.

(2.2): Obtain, from the third security group association information and based on the destination network address carried in the packet, the third security group corresponding to the destination network address. Specifically, if the destination network address of the packet is the network address of the third terminal, the third security group to which the third terminal belongs may be determined based on the network address of the third terminal and the third security group association information of the third terminal.

1804: The execution node processes the packet based on a security group policy that matches both the third security group of the third terminal and the fourth security group to which the network resource belongs.

Optionally, the execution node may match, based on the third security group to which the third terminal belongs and the fourth security group to which the network resource belongs, the security group policy corresponding to the third security group and the fourth security group. In a possible implementation, the execution node may obtain, from a correspondence between a security group and a security group policy and based on the third security group to which the third terminal belongs and the fourth security group to which the network resource belongs, the security group policy corresponding to the third security group and the fourth security group. For descriptions of the correspondence between a security group and a security group policy, refer to step 1204 in the foregoing embodiment of FIG. 12. Details are not described herein.

For a manner of matching the security group policy based on the correspondence between a security group and a security group policy, it is assumed that a security group policy in which a source security group is the third security group and a destination security group is the fourth security group is referred to as a third security group policy, and a security group policy in which a source security group is the fourth security group and a destination security group is the third security group is referred to as a fourth security group policy. For the manner of matching the security group policy, refer to the following cases 1 and 2:
Case 1: If the packet is the packet sent by the third terminal to the network resource, the manner of matching the security group policy may include: obtaining the third security group policy from the correspondence between a security group and a security group policy.
Case 2: If the packet is the packet sent by the network resource to the third terminal, the manner of matching the security group policy may include: obtaining the fourth security group policy from the correspondence between a security group and a security group policy.

Optionally, the third security group policy and the fourth security group policy may be different. In this way, a manner of processing the packet sent by the third terminal to the network resource and a manner of processing the packet sent by the network resource to the third terminal may be different. Specifically, either of or a plurality of the following implementations (1) and (2) may be included.

Implementation (1): An access rights control policy in the third security group policy and an access rights control policy in the fourth security group policy may be different, thereby implementing a function that rights of accessing the network resource by the third terminal are different from rights of accessing the third terminal by the network resource. For example, the third terminal may be allowed to access the network resource, and the network resource may be prohibited from accessing the third terminal. In an example scenario, a terminal of an administrator may be allowed to access an elastic cloud server, and the elastic cloud server is prohibited from accessing the terminal of the administrator.

Implementation (2): An experience assurance policy in the third security group policy and an experience assurance policy in the fourth security group policy may be different, thereby implementing a function that quality of service of accessing the network resource by the third terminal is different from quality of service of accessing the third terminal by the network resource. For example, a packet for accessing the network resource by the third terminal may be forwarded in a high priority, and a packet for accessing the third terminal by the network resource is forwarded in a low priority.

Certainly, that the third security group policy and the fourth security group policy are different is merely an optional manner. The third security group policy and the fourth security group policy may also be the same. This is not limited in this embodiment.

In the method provided in this embodiment, by receiving the third security group association information of the third terminal that is sent by the synchronization node, the execution node can hold security group association information of a terminal authenticated by an authentication node, and therefore can perceive a security group to which the terminal belongs. In this way, when receiving a packet transmitted between the terminal and the network resource, the execution node may process the packet based on a security group policy that matches the security group to which the terminal belongs and the security group to which the network resource belongs, to control rights of mutual access between the terminal and the network resource.

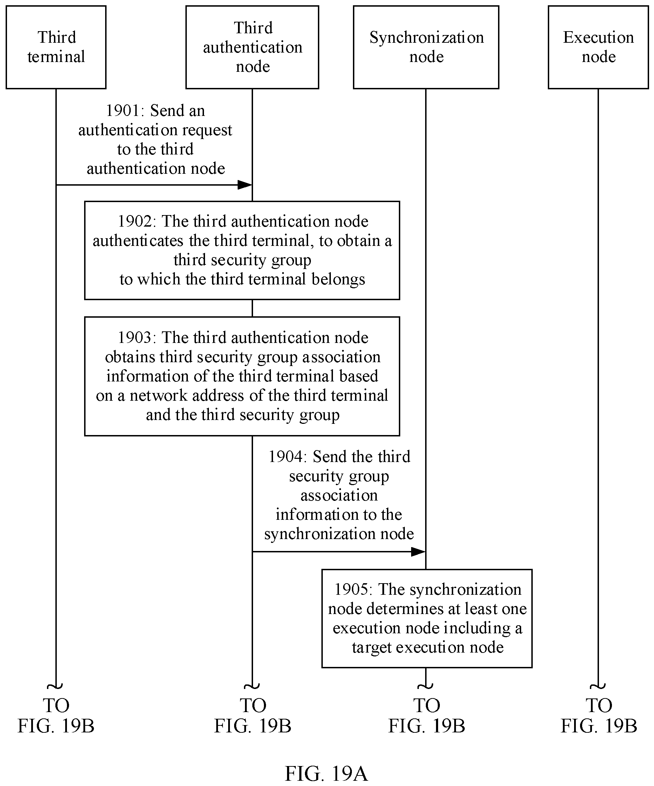

FIG. 19A and FIG. 19B are a flowchart of a service processing method according to an embodiment of this application. As shown in FIG. 19A and FIG. 19B, interaction bodies include an authentication node, a third terminal, a synchronization node, and an execution node, and the method includes the following steps.

1901: The third terminal sends an authentication request to a third authentication node.

1902: When the third authentication node receives the authentication request of the third terminal, the third authentication node authenticates the third terminal, to obtain a third security group to which the third terminal belongs.

1903: The third authentication node obtains third security group association information of the third terminal based on a network address of the third terminal and the third security group.

1904: The third authentication node sends the third security group association information to the synchronization node.

1905: When the synchronization node receives the third security group association information of the third terminal that is sent by the authentication node, the synchronization node determines at least one execution node including a target execution node, where the target execution node is configured to process a packet of the terminal based on a third security group policy.

1906: The synchronization node sends the third security group association information to the at least one execution node.

1907: The execution node receives the third security group association information of the third terminal that is sent by the synchronization node.

1908: The third terminal sends, to the execution node, a packet transmitted between the third terminal and a network resource.

1909: When the execution node receives the packet transmitted between the third terminal and the network resource, the execution node obtains, from the third security group association information and based on a network address carried in the packet, a third security group corresponding to the network address.

1910: The execution node processes the packet based on a third security group policy that matches both the third security group and a fourth security group to which the network resource belongs.

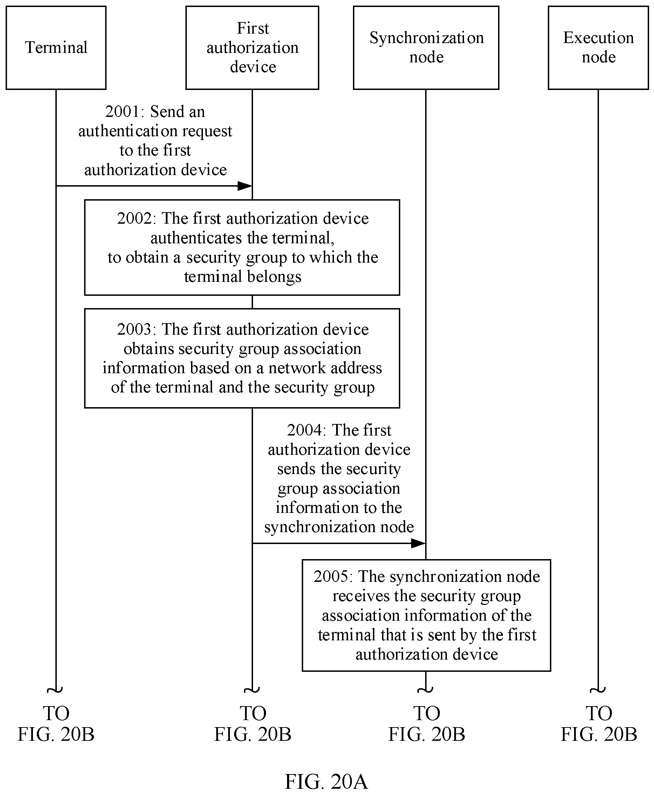

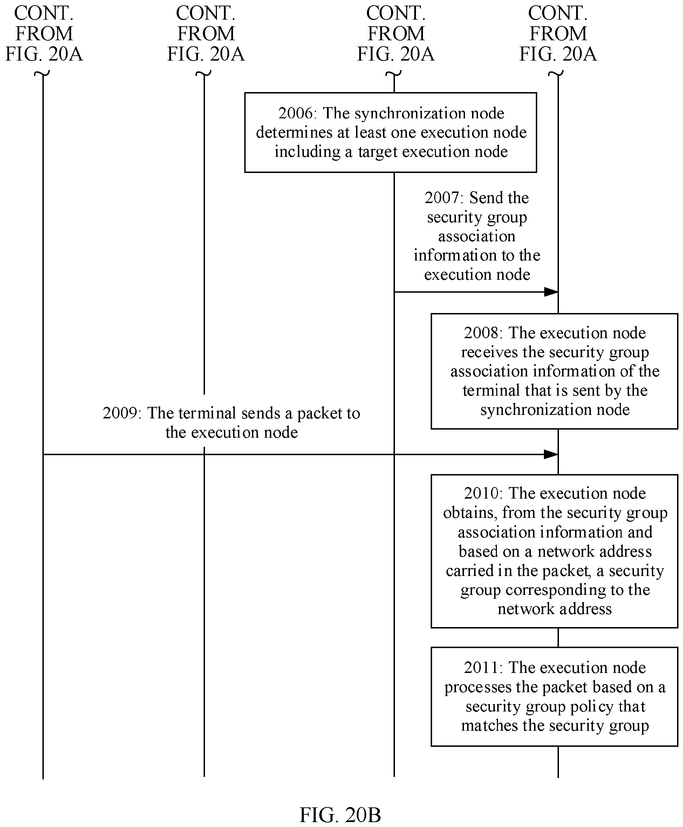

Optionally, the method provided in this embodiment of this application may be applied to a scenario in which an authorization device supports a target function. The target function is a function of sending security group association information to the synchronization node. Specific implementation may be shown in the following embodiment of FIG. 20A and FIG. 20B.

FIG. 20A and FIG. 20B are a flowchart of a service processing method according to an embodiment of this application. As shown in FIG. 20A and FIG. 20B, interaction bodies of the method include a first authorization device, a terminal, a synchronization node, and an execution node, and the method includes the following steps.

2001: The terminal sends an authentication request to the first authorization device.

The first authorization device is an authorization device that supports a target function. For example, the first authorization device may support sending of security group association information to an authentication node, and also supports sending of the security group association information to a device other than the authentication node. For example, the first authorization device may be a self-developed device. For example, the first authorization device may be a self-developed AAA server.

2002: When the first authorization device receives the authentication request of the terminal, the first authorization device authenticates the terminal, to obtain a security group to which the terminal belongs.

Step 2002 is similar to step 901 and step 902 in the foregoing embodiment of FIG. 9, and details are not described herein.

2003: The first authorization device obtains security group association information of the terminal based on a network address of the terminal and the security group.

Step 2003 is similar to step 903 in the foregoing embodiment of FIG. 9, and details are not described herein.

Optionally, before sending the security group association information to the synchronization node, the first authorization device may encode the security group association information based on a structured data format, to obtain the encoded security group association information.

Optionally, before sending the security group association information to the synchronization node, the first authorization device may compress the security group association information, to obtain the compressed security group association information.

2004: The first authorization device sends the security group association information to the synchronization node.

Step 2004 is similar to step 904 in the foregoing embodiment of FIG. 9, and details are not described herein.

Optionally, if the first authorization device encodes the security group association information based on the structured data format in step 2004, this step may include: The first authorization device sends the encoded security group association information to the synchronization node.

Optionally, if the first authorization device compresses the security group association information in step 2004, this step may include: The first authorization device sends the compressed security group association information to the synchronization node.

2005: The synchronization node receives the security group association information of the terminal that is sent by the first authorization device.

Step 2005 may be similar to step 1001 in the foregoing embodiment of FIG. 10, and details are not described herein.

2006: The synchronization node determines at least one execution node including a target execution node, where the target execution node is configured to process a packet of the terminal based on a security group policy.

Step 2006 may be similar to step 1001 and step 1002 in the foregoing embodiment of FIG. 10, and details are not described herein.

2007: The synchronization node sends the security group association information to the at least one execution node.

Step 2007 may be similar to step 1003 in the foregoing embodiment of FIG. 10, and details are not described herein.

2008: The execution node receives the security group association information of the terminal that is sent by the synchronization node.

Step 2008 may be similar to step 1201 in the foregoing embodiment of FIG. 12, and details are not described herein.

2009: The terminal sends the packet to the execution node.

2010: When the execution node receives the packet of the terminal, the execution node obtains, from the security group association information and based on a network address carried in the packet, a security group corresponding to the network address.

Step 2010 may be similar to step 1202 and step 1203 in the foregoing embodiment of FIG. 12, and details are not described herein.

2011: The execution node processes the packet based on a security group policy that matches the security group.

Step 2011 may be similar to step 1204 in the foregoing embodiment of FIG. 12, and details are not described herein.

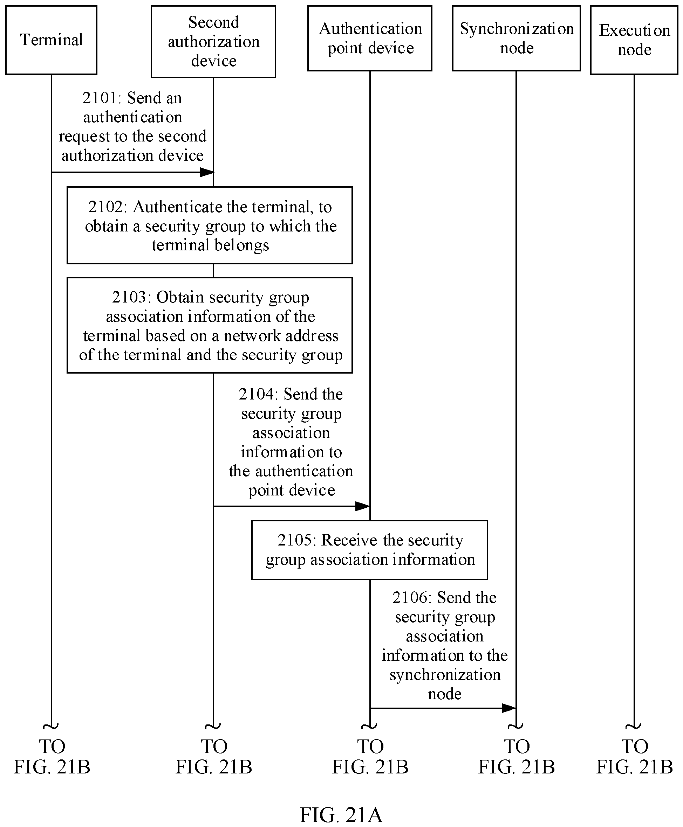

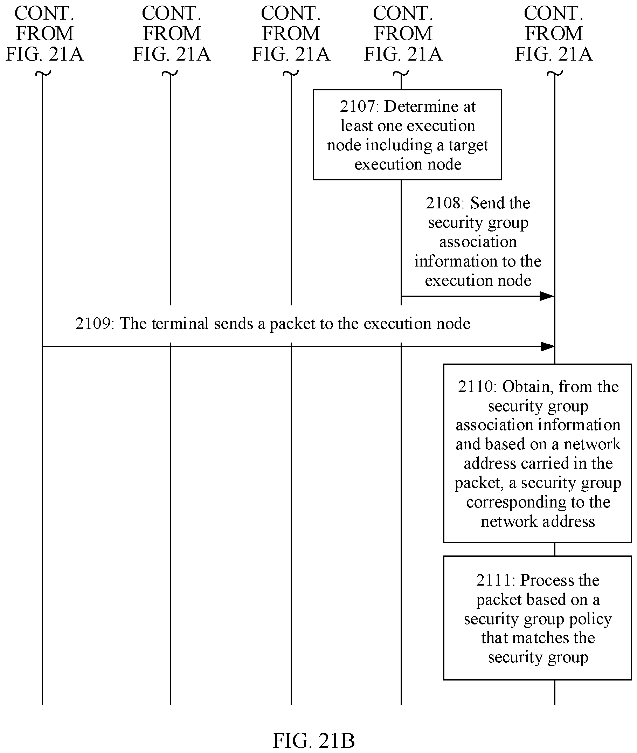

Optionally, the method provided in this embodiment of this application may also be applied to a scenario in which the authorization device does not support a target function. Specific implementation may be shown in the following embodiment of FIG. 21A and FIG. 21B.

FIG. 21A and FIG. 21B are a flowchart of a service processing method according to an embodiment of this application. As shown in FIG. 21A and FIG. 21B, interaction bodies of the method include an authentication point device, a second authorization device, a terminal, a synchronization node, and an execution node, and the method includes the following steps.

2101: The terminal sends an authentication request to the second authorization device.

The second authorization device is an authorization device that does not support a target function. For example, the second authorization device may be a third-party device. For example, the second authorization device may be a third-party AAA server.

2102: When the second authorization device receives the authentication request of the terminal, the second authorization device authenticates the terminal, to obtain a security group to which the terminal belongs.

Step 2102 is similar to step 901 and step 902 in the foregoing embodiment of FIG. 9, and details are not described herein.

2103: The second authorization device obtains security group association information of the terminal based on a network address of the terminal and the security group.

Step 2103 is similar to step 903 in the foregoing embodiment of FIG. 9, and details are not described herein.

Optionally, before sending the security group association information to the synchronization node, the second authorization device may encode the security group association information based on a structured data format.

Optionally, before sending the security group association information to the synchronization node, the second authorization device may compress the security group association information.

2104: The second authorization device sends the security group association information to the authentication point device.

Step 2104 is similar to step 904 in the foregoing embodiment of FIG. 9, and details are not described herein.

Optionally, if the second authorization device encodes the security group association information based on the structured data format in step 2104, this step may include: The second authorization device sends the encoded security group association information to the authentication point device.

Optionally, if the second authorization device compresses the security group association information in step 2104, this step may include: The second authorization device sends the compressed security group association information to the authentication point device.

2105: The authentication point device receives the security group association information.

Step 2105 may be similar to step 1001 in the foregoing embodiment of FIG. 10, and details are not described herein.

2106: The authentication point device sends the security group association information to the synchronization node.

Step 2106 may be similar to step 1002 in the foregoing embodiment of FIG. 10, and details are not described herein.

Optionally, if the second authorization device encodes the security group association information based on the structured data format in step 2104, this step may include: The authentication point device sends the encoded security group association information to the synchronization node.

Optionally, if the second authorization device compresses the security group association information in step 2104, this step may include: The authentication point device sends the compressed security group association information to the synchronization node.

2107: The synchronization node receives the security group association information of the terminal that is sent by the authentication point device.

Step 2107 may be similar to step 1001 in the foregoing embodiment of FIG. 10, and details are not described herein.

2108: The synchronization node determines at least one execution node including a target execution node, where the target execution node is configured to process a packet of the terminal based on a security group policy.

Step 2108 may be similar to step 1002 in the foregoing embodiment of FIG. 10, and details are not described herein.

2108: The synchronization node sends the security group association information to the at least one execution node.

2109: The terminal sends the packet to the execution node.

2110: When the execution node receives the packet of the terminal, the execution node obtains, from the security group association information and based on a network address carried in the packet, a security group corresponding to the network address.

Step 2110 may be similar to step 1202 and step 1203 in the foregoing embodiment of FIG. 12, and details are not described herein.

2111: The execution node processes the packet based on a security group policy that matches the security group.

Step 2111 may be similar to step 1204 in the foregoing embodiment of FIG. 12, and details are not described herein.

In the method provided in this embodiment, the second authorization device sends the security group association information to the authentication point device, the authentication point device reports the security group association information to the synchronization node, and the synchronization node sends the security group association information to the execution node, so that the security group association information can be synchronized in a scenario in which the authorization device does not support the target function, to break a technical barrier that the third-party device usually does not support delivering of the security group association information to a network device other than the authentication point device, thereby implementing a function of supporting interconnection with the third-party device and improving network compatibility.

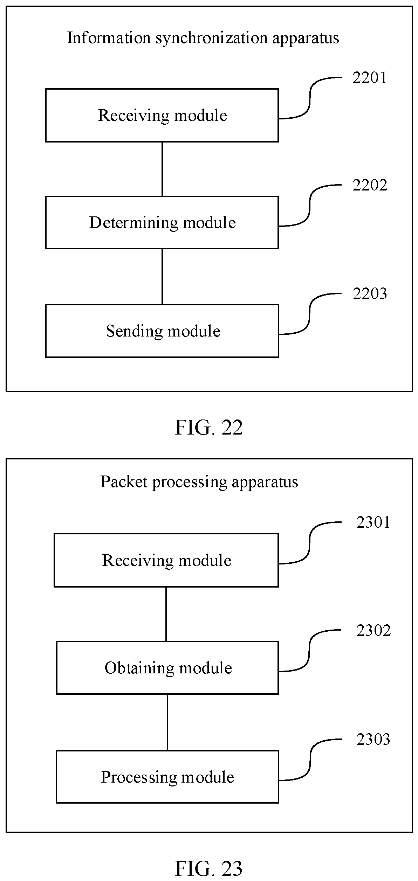

FIG. 22 is a schematic structural diagram of an information synchronization apparatus according to an embodiment of this application. As shown in FIG. 22, the information synchronization apparatus includes:
a receiving module 2201, configured to perform any one or more of the foregoing steps 1001, 1401, 1402, 1701, 2005, and 2105;
a determining module 2202, configured to perform any one or more of the foregoing steps 1002, 1305, 1403, 1610, 1702, 1905, 2006, and 2107; and
a sending module 2203, configured to perform any one or more of the foregoing steps 1003, 1306, 1404, 1703, 1906, 2007, and 2108.

Optionally, the determining module 2202 is configured to perform either of or a plurality of the implementation 1 and the implementation 2 in the foregoing step 1002.

Optionally, the receiving module 2201 is further configured to receive a configuration instruction.

A first point that should be noted is that, each module in the embodiment of FIG. 22 may be specifically a software module that is in software and that performs a corresponding function. To be specific, a "module" may be a function module including a group of computer programs, the computer program may be a source program or a target program, and the computer program may be implemented by using any programming language. By using the foregoing modules, a computer device may implement an information synchronization function based on hardware of a processor and a memory. To be specific, the computer device may run, by using the processor of the computer device, software code stored in the memory of the computer device, to execute corresponding software to implement the information synchronization function.

A second point that should be noted is that, when the information synchronization apparatus provided in the embodiment of FIG. 22 synchronizes information, division of the foregoing function modules is merely used as an example for description. In actual application, the foregoing functions may be allocated to different function modules based on a requirement for completion, to be specific, an internal structure of the information synchronization apparatus is divided into different function modules, to complete all or some of the functions described above. In addition, the information synchronization apparatus provided in the foregoing embodiment belongs to a same concept as the embodiment of the information synchronization method. For a specific implementation process of the information synchronization apparatus, refer to the method embodiment. Details are not described herein.

FIG. 23 is a schematic structural diagram of a packet processing apparatus according to an embodiment of this application. As shown in FIG. 23, the packet processing apparatus includes:
a receiving module 2301, configured to perform any one or more of steps 1201, 1202, 1307, 1501, 1502, 1612, 1503, 1801, 1802, 1907, and 2008;
an obtaining module 2302, configured to perform any one or more of steps 1203, 1309, 1504, 1614, 1803, 1909, and 2010; and
a processing module 2303, configured to perform any one or more of steps 1204, 1310, 1505, 1615, 1617, 1618, 1804, 1910, and 2011.

A first point that should be noted is that, each module in the embodiment of FIG. 23 may be specifically a software module that is in software and that performs a corresponding function. To be specific, a "module" may be a function module including a group of computer programs, the computer program may be a source program or a target program, and the computer program may be implemented by using any programming language. By using the foregoing modules, a computer device may implement a packet processing function based on hardware of a processor and a memory. To be specific, the computer device may run, by using the processor of the computer device, software code stored in the memory of the computer device, to execute corresponding software to implement the packet processing function.

A second point that should be noted is that, when the packet processing apparatus provided in the embodiment of FIG. 23 processes a packet, division of the foregoing function modules is merely used as an example for description. In actual application, the foregoing functions may be allocated to different function modules based on a requirement for completion, to be specific, an internal structure of the packet processing apparatus is divided into different function modules, to complete all or some of the functions described above. In addition, the packet processing apparatus provided in the foregoing embodiment belongs to a same concept as the embodiment of the packet processing method. For a specific implementation process of the packet processing apparatus, refer to the method embodiment. Details are not described herein.

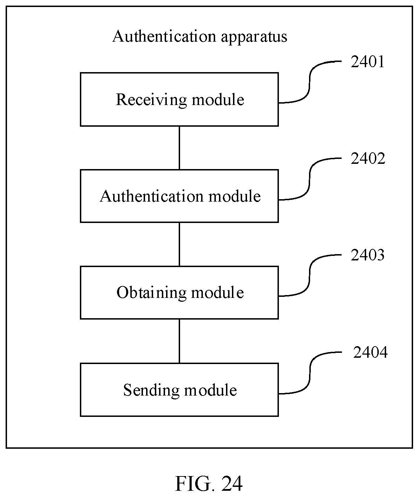

FIG. 24 is a schematic structural diagram of an authentication apparatus according to an embodiment of this application. As shown in FIG. 24, the authentication apparatus includes:
a receiving module 2401, configured to perform any one or more of steps 901, 1701, and 2105;
an authentication module 2402, configured to perform any one or more of steps 902, 1302, 1602, 1602, 1902, 2002, and 2102;
an obtaining module 2403, configured to perform any one or more of steps 903, 1303, 1603, 1605, 1903, 2003, and 2103; and
a sending module 2404, configured to perform any one or more of steps 904, 1304, 1604, 1607, 1904, 2004, 2104, and 2106.

A first point that should be noted is that, each module in the embodiment of FIG. 24 may be specifically a software module that is in software and that performs a corresponding function. To be specific, a "module" may be a function module including a group of computer programs, the computer program may be a source program or a target program, and the computer program may be implemented by using any programming language. By using the foregoing modules, a computer device may implement an authentication function based on hardware of a processor and a memory. To be specific, the computer device may run, by using the processor of the computer device, software code stored in the memory of the computer device, to execute corresponding software to implement the authentication function.

A second point that should be noted is that, when the authentication apparatus provided in the embodiment of FIG. 24 performs authentication, division of the foregoing function modules is merely used as an example for description. In actual application, the foregoing functions may be allocated to different function modules based on a requirement for completion, to be specific, an internal structure of the authentication apparatus is divided into different function modules, to complete all or some of the functions described above. In addition, the authentication apparatus provided in the foregoing embodiment belongs to a same concept as the embodiment of the authentication method. For a specific implementation process of the authentication apparatus, refer to the method embodiment. Details are not described herein.

In an example embodiment, this application further provides a computer program product that includes an instruction, and when the computer program product runs on a computer device, the computer device can be enabled to implement an operation performed in the information synchronization method in the foregoing embodiment.

In an example embodiment, this application further provides a computer program product that includes an instruction, and when the computer program product runs on a computer device, the computer device can be enabled to implement an operation performed in the packet processing method in the foregoing embodiment.

In an example embodiment, this application further provides a computer program product that includes an instruction, and when the computer program product runs on a computer device, the computer device can be enabled to implement an operation performed in the authentication method in the foregoing embodiment.

In an example embodiment, this application further provides a service processing system. In a possible implementation, the system includes the information synchronization apparatus in the foregoing embodiment of FIG. 22, the packet processing apparatus in the embodiment of FIG. 23, and the authentication apparatus in the embodiment of FIG. 24.

In another possible implementation, the system includes:
the synchronization node, the execution node, and the authentication node in the foregoing method embodiments.

In an example embodiment, this application further provides a chip. The chip includes a processor and/or a program instruction. When the chip runs, an operation performed in the information synchronization method in the foregoing embodiment is implemented.

In an example embodiment, this application further provides a chip. The chip includes a processor and/or a program instruction. When the chip runs, an operation performed in the packet processing method in the foregoing embodiment is implemented.

In an example embodiment, this application further provides a chip. The chip includes a processor and/or a program instruction. When the chip runs, an operation performed in the authentication method in the foregoing embodiment is implemented.

All the foregoing optional technical solutions may form an optional embodiment of this application by using any combination. Details are not described herein.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer program instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid-state drive), or the like.

The term "and/or" in this application describes only an association relationship for associated objects and represents that three relationships may exist. For example, A and/or B may represent the following three cases: Only A exists, both A and B exist, and only B exists. In addition, the character "/" in this application generally indicates an "or" relationship between the associated objects.

In this application, the term "a plurality of' means two or more. For example, a plurality of data packets mean two or more data packets.

In this application, the terms "first", "second", and the like are used to distinguish between same or similar terms whose functions and functions are basically the same. A person skilled in the art may understand that the words "first", "second", and the like do not limit a quantity and an execution sequence.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

## Claims

1. An information synchronization method, wherein the method comprises:
receiving security group association information of a terminal that is sent by an authentication node, wherein the security group association information is used to indicate a mapping relationship between a network address of the terminal and a security group to which the terminal belongs;
determining at least one execution node comprising a target execution node, wherein the target execution node is configured to process a packet of the terminal based on a security group policy; and
sending the security group association information to the at least one execution node.

2. The method according to claim 1, wherein the determining at least one execution node comprising a target execution node comprises:
determining, from a correspondence between a network segment and an execution node and based on a target network segment to which the network address belongs, the target execution node corresponding to the target network segment; or
determining each execution node in a network.

3. The method according to claim 2, wherein before the determining, from a correspondence between a network segment and an execution node and based on a target network segment to which the network address belongs, the target execution node corresponding to the target network segment, the method further comprises:
receiving a configuration instruction, wherein the configuration instruction is used to indicate the correspondence between a network segment and an execution node.

4. The method according to any one of claims 1 to 3, wherein the receiving security group association information of a terminal that is sent by an authentication node comprises:
receiving first security group association information of a first terminal that is sent by a first authentication node, wherein the first security group association information is used to indicate a mapping relationship between a network address of the first terminal and a first security group to which the first terminal belongs; and
receiving second security group association information of a second terminal that is sent by a second authentication node, wherein the second authentication node is different from the first authentication node, and the second security group association information is used to indicate a mapping relationship between a network address of the second terminal and a second security group to which the second terminal belongs; and
correspondingly, the determining at least one execution node comprising a target execution node comprises:
determining the at least one execution node comprising a first target execution node, wherein the first target execution node is configured to process, based on the security group policy, a packet transmitted between the first terminal and the second terminal.

5. The method according to any one of claims 1 to 3, wherein the receiving security group association information of a terminal that is sent by an authentication node comprises:
receiving third security group association information of a third terminal that is sent by a third authentication node, wherein the third security group association information is used to indicate a mapping relationship between a network address of the third terminal and a third security group to which the third terminal belongs; and
correspondingly, the determining at least one execution node comprising a target execution node comprises:
determining the at least one execution node comprising a second target execution node, wherein the second target execution node is configured to process, based on the security group policy, a packet transmitted between the third terminal and a network resource.

6. The method according to any one of claims 1 to 5, wherein the receiving security group association information of a terminal that is sent by an authentication node comprises:
receiving the security group association information of the terminal that is sent by an authorization device; or
receiving the security group association information of the terminal that is sent by an authentication point device, wherein the security group association information of the terminal is sent by an authorization device to the authentication point device.

7. The method according to any one of claims 1 to 6, wherein the method further comprises:
receiving updated security group association information of the terminal that is sent by the authentication node; and
sending the updated security group association information to the at least one execution node, wherein
the updated security group association information is used to indicate a mapping relationship between an updated network address of the terminal and the security group, or the updated security group association information is used to indicate a mapping relationship between the network address of the terminal and an updated security group to which the terminal belongs, or the updated security group association information is used to indicate a mapping relationship between an updated network address of the terminal and an updated security group to which the terminal belongs.

8. An authentication method, wherein the method comprises:
receiving an authentication request of a terminal;
authenticating the terminal to obtain a security group to which the terminal belongs;
obtaining security group association information of the terminal based on a network address of the terminal and the security group, wherein the security group association information is used to indicate a mapping relationship between the network address and the security group to which the terminal belongs; and
sending the security group association information to a synchronization node, wherein the synchronization node is configured to synchronize the security group association information to at least one execution node comprising a target execution node, and the target execution node is configured to process a packet of the terminal based on a security group policy.

9. The method according to claim 8, wherein the sending the security group association information to a synchronization node comprises:
sending the security group association information to an authentication point device, wherein the security group association information is to be sent by the authentication point device to the synchronization node.

10. The method according to claim 8 or 9, wherein the method further comprises:
obtaining an updated network address of the terminal; obtaining updated security group association information of the terminal based on the updated network address and the security group, wherein the updated security group association information is used to indicate a mapping relationship between the updated network address and the security group; and sending the updated security group association information to the synchronization node;
obtaining an updated security group to which the terminal belongs; obtaining updated security group association information of the terminal based on the network address of the terminal and the updated security group, wherein the updated security group association information is used to indicate a mapping relationship between the network address of the terminal and the updated security group; and sending the updated security group association information of the terminal to the synchronization node; or
obtaining an updated network address of the terminal and an updated security group to which the terminal belongs; obtaining updated security group association information of the terminal based on the updated network address and the updated security group, wherein the updated security group association information is used to indicate a mapping relationship between the updated network address and the updated security group; and sending the updated security group association information of the terminal to the synchronization node.

11. An information synchronization apparatus, wherein the apparatus comprises:
a receiving module, configured to receive security group association information of a terminal that is sent by an authentication node, wherein the security group association information is used to indicate a mapping relationship between a network address of the terminal and a security group to which the terminal belongs;
a determining module, configured to determine at least one execution node comprising a target execution node, wherein the target execution node is configured to process a packet of the terminal based on a security group policy; and
a sending module, configured to send the security group association information to the at least one execution node.

12. The apparatus according to claim 11, wherein the determining module is configured to: determine, from a correspondence between a network segment and an execution node and based on a target network segment to which the network address belongs, the target execution node corresponding to the target network segment; or determine each execution node in a network.

13. The apparatus according to claim 12, wherein the receiving module is further configured to receive a configuration instruction, wherein the configuration instruction is used to indicate the correspondence between a network segment and an execution node.

14. The apparatus according to any one of claims 11 to 13, wherein the receiving module is configured to: receive first security group association information of a first terminal that is sent by a first authentication node, wherein the first security group association information is used to indicate a mapping relationship between a network address of the first terminal and a first security group to which the first terminal belongs; and receive second security group association information of a second terminal that is sent by a second authentication node, wherein the second authentication node is different from the first authentication node, and the second security group association information is used to indicate a mapping relationship between a network address of the second terminal and a second security group to which the second terminal belongs; and
correspondingly, the determining module is configured to determine the at least one execution node comprising a first target execution node, wherein the first target execution node is configured to process, based on the security group policy, a packet transmitted between the first terminal and the second terminal.

15. The apparatus according to any one of claims 11 to 13, wherein the receiving module is configured to receive third security group association information of a third terminal that is sent by a third authentication node, wherein the third security group association information is used to indicate a mapping relationship between a network address of the third terminal and a third security group to which the third terminal belongs; and
correspondingly, the determining module is configured to determine the at least one execution node comprising a second target execution node, wherein the second target execution node is configured to process, based on the security group policy, a packet transmitted between the third terminal and a network resource.

16. The apparatus according to any one of claims 11 to 15, wherein the receiving module is configured to: receive the security group association information of the terminal that is sent by an authorization device; or receive the security group association information of the terminal that is sent by an authentication point device, wherein the security group association information of the terminal is sent by an authorization device to the authentication point device.

17. The apparatus according to any one of claims 11 to 16, wherein the receiving module is further configured to receive updated security group association information of the terminal that is sent by the authentication node; and
the sending module is further configured to send the updated security group association information to the at least one execution node, wherein
the updated security group association information is used to indicate a mapping relationship between an updated network address of the terminal and the security group, or the updated security group association information is used to indicate a mapping relationship between the network address of the terminal and an updated security group to which the terminal belongs, or the updated security group association information is used to indicate a mapping relationship between an updated network address of the terminal and an updated security group to which the terminal belongs.

18. An authentication apparatus, wherein the apparatus comprises:
a receiving module, configured to receive an authentication request of a terminal;
an authentication module, configured to authenticate the terminal to obtain a security group to which the terminal belongs;
an obtaining module, configured to obtain security group association information of the terminal based on a network address of the terminal and the security group, wherein the security group association information is used to indicate a mapping relationship between the network address and the security group to which the terminal belongs; and
a sending module, configured to send the security group association information to a synchronization node, wherein the synchronization node is configured to synchronize the security group association information to at least one execution node comprising a target execution node, and the target execution node is configured to process a packet of the terminal based on a security group policy.

19. The apparatus according to claim 18, wherein the sending module is configured to send the security group association information to an authentication point device, wherein the security group association information is to be sent by the authentication point device to the synchronization node.

20. The apparatus according to claim 18 or 19, wherein
the obtaining module is further configured to: obtain an updated network address of the terminal, and obtain updated security group association information of the terminal based on the updated network address and the security group, wherein the updated security group association information is used to indicate a mapping relationship between the updated network address and the security group;
the obtaining module is further configured to: obtain an updated security group to which the terminal belongs, and obtain updated security group association information of the terminal based on the network address of the terminal and the updated security group, wherein the updated security group association information is used to indicate a mapping relationship between the network address of the terminal and the updated security group; or
the obtaining module is further configured to: obtain an updated network address of the terminal and an updated security group to which the terminal belongs, and obtain updated security group association information of the terminal based on the updated network address and the updated security group, wherein the updated security group association information is used to indicate a mapping relationship between the updated network address and the updated security group; and
the sending module is configured to send the updated security group association information of the terminal to the synchronization node.

21. A computer device, wherein the computer device comprises a processor and a memory, the memory stores at least one instruction, and the instruction is loaded and executed by the processor to implement an operation performed in the information synchronization method according to any one of claims 1 to 7, or an operation performed in the authentication method according to any one of claims 8 to 10.

22. A computer-readable storage medium, wherein the storage medium stores at least one instruction, and the instruction is loaded and executed by a processor to implement an operation performed in the information synchronization method according to any one of claims 1 to 7, or an operation performed in the authentication method according to any one of claims 8 to 10.
